(19) Europäisches Patentamt
European Patent Office
Office européen des brevets

(11) EP 3 671 593 B1

(12) **EUROPEAN PATENT SPECIFICATION**

(45) Date of publication and mention of the grant of the patent:
**24.07.2024 Bulletin 2024/30**

(21) Application number: **18215355.1**

(22) Date of filing: **21.12.2018**

(51) International Patent Classification (IPC):
***G06Q 10/0833*** *(2023.01)*

(52) Cooperative Patent Classification (CPC):
**G06Q 10/0833**

(54) **SYSTEM AND METHOD FOR TRACKING BAGGAGE ON CRUISE LINERS**

SYSTEM UND VERFAHREN ZUR VERFOLGUNG VON GEPÄCKSTÜCKEN AUF KREUZFAHRTSCHIFFEN

SYSTÈME ET PROCÉDÉ DE SUIVI DE BAGAGES SUR DES BATEAUX DE CROISIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **SITA Information Networking Computing UK Limited**
**Hayes, Middlesex UB3 1BW (GB)**

(72) Inventors:
- **GODDARD, Stephen David**
  **Little Hampton, BN17 7RF (GB)**
- **SANGLIER, Adrien**
  **1216 Geneva (CH)**
- **POPE, Maurice Royston**
  **Halesowen**
  **West Midlands, B63 2XF (GB)**

(74) Representative: **Sadler, Peter Frederick**
**Reddie & Grose LLP**
**The White Chapel Building**
**10 Whitechapel High Street**
**London E1 8QS (GB)**

(56) References cited:
**US-A1- 2005 258 231** **US-A1- 2016 021 491**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

FIELD OF INVENTION

This invention relates to systems and methods of tracking baggage on cruise liners.

BACKGROUND TO THE INVENTION

The handling of baggage on cruise liners is at present very simplistic in comparison to airport solutions. The handling of baggage by airlines and airports is controlled by standards such as IATA 753 which requires baggage tracking from the moment a passenger releases a bag to an agent if that agent is not subsequently the airline.

Typically, when embarking on a cruise ship, passengers hand their baggage to an agent upon arrival to a terminal, with hand filled bag tags attached to the bags which identify the ship, the passenger and the passenger's cabin. These bags are transported to the ship manually and delivered to the cabins. Baggage which is not required on the cruise is placed in a hold. At the end of the journey bags are placed in specific zones in the arrival port from which passengers collect them. This is a highly inefficient process and incompatible with onward flights as it contravenes the IATA 753 requirements mentioned above.

There is therefore a need for an improved method and system for handling baggage on cruise liners that addresses these problems.

US 2005/258231 describes a system and method for processing a cruise ship passenger and the passenger's baggage for travel on an airline flight departing from a departure airport includes, on a cruise ship or at a cruise ship terminal, collecting baggage from the cruise ship passenger, marking the collected baggage with an identifier including passenger identifying information and airline identifying information, and issuing a boarding pass to the passenger, the passenger having previously purchased a ticket for the flight.

US 2016/021491 describes generally the application of mesh networks to luggage. Mesh node modules are associated with pieces of luggage, or packages, etc. and companion luggage or packages can dynamically form a mesh network which uploads location information of the nodes and in some cases additional information, e.g., shock signals, to a network. The information may be downloaded to an owner's CE device.

SUMMARY OF INVENTION

The scope of the present invention is defined by the scope of the appended claims. Any embodiments which do not fall within the scope of the claims are examples that are helpful for understanding the invention, but do not form a part of the invention.

According to the invention, there is provided a method of tracking baggage on a cruise ship, comprising the steps of: for an item of baggage, generating and associating an unique baggage identifier with a unique passenger identifier to form a combination identifier, the passenger identifier being retrieved from a reservation system; the combination identifier comprising an indication of the cruise line and a unique reference number for the item of baggage, the name of the passenger, a cruise voyage number, voyage date, arrival or departure indicator, and cabin number; generating and storing a baggage message including the combination identifier; generating a baggage tag including the combination identifier and affixing the baggage tag to the bag; prior to embarkation of the passenger onto the cruise ship: scanning the baggage tag with a scanning device to read the combination identifier, validating the combination identifier against the stored baggage message to enable check-in of the baggage and updating the baggage message; on delivery of the baggage to a passenger's cabin: scanning a location identifier in the region of the cabin with a scanning device and notifying the passenger via a mobile application stored on the passenger's mobile device that the baggage has been delivered to their cabin, and updating the baggage message with the status of the bag; prior to arrival at a destination port: scanning the baggage tag and updating the status of the baggage message; loading the baggage into a baggage container, scanning a baggage container identifier and associating the baggage container identifier with the baggage and sending an updated baggage message including the association; on unloading of the baggage containers at a port: for a given item of baggage, scanning the baggage container identifier in which the item of luggage is held and the baggage tag of the item of baggage with a scanning device, retrieving the associated baggage container identifier for the item of baggage and determining whether the retrieved identity matches the scanned baggage container identifier; on departure of the passenger from the port: scanning the item of baggage and updating the status of the baggage in the baggage message to indicate that the baggage has left the port.

The invention also resides in a system for tracking baggage on a cruise ship, comprising: for an item of baggage, software for generating and associating an unique baggage identifier with a unique passenger identifier to form a combination identifier, the passenger identifier being retrieved from a reservation system; the combination identifier comprising an indication of the cruise line and a unique reference number for the item of baggage, the name of the passenger, a cruise voyage number, voyage date, arrival or departure indicator, and cabin number; software for generating and storing a baggage message including the combination identifier in a data store; software for generating a baggage tag including the combination identifier for affixing to the bag; a scanning device for scanning the baggage tag prior to embarkation of the passenger onto the cruise ship to read the combination identifier, the scanning device including software for communicating with the data store to validate the combination identifier against the stored baggage message, thereby to enable check-in of the baggage, and for updating the baggage message; a scanning device for scanning a location identifier arranged in the region of the passenger's cabin, the scanning device including software for notifying the passenger via a mobile application stored on the passenger's mobile device that the baggage has been delivered to their cabin, and for updating the baggage message stored in the data store with the status of the bag; a scanning device for scanning the baggage tag prior to arrival in a port having software for updating the status of the baggage message; a scanning device for scanning an item of baggage on loading into a baggage container for delivery to a quay, and for scanning a baggage container identifier, the scanner having software for associating the baggage container identifier with the baggage and for sending an updated baggage message including the association to the data store; a scanning device for scanning the baggage container identifier in which the item of luggage is held and the baggage tag of the item of baggage with a scanning device as the item of baggage is unloaded from the baggage container, the scanner including software for retrieving the associated baggage container identifier for the item of baggage and determining whether the retrieved identity matches the scanned baggage container identifier; a scanning device for scanning the item of baggage on departure of the passenger from the port and having software for updating the status of the baggage in the baggage message to indicate that the baggage has left the port.

Embodiments of the invention have many advantages over the prior art. For example, they provide for greatly increased security over that which is available at present on cruise liners. Unlike existing systems, embodiments of the invention enable the cruise operator to know exactly how many bags are on board the ship and each bag has a unique identifier. At present, bags on cruise ships have a label which identifies the passenger name, cabin number and cruise but there is no central recordal of that information. Embodiments of the present invention provide a unique identifier which links a bag to and individual passenger in a manner that can be read and accessed centrally by an administrator.

Embodiments of the invention also increase security with respect to potential smuggling and terrorist offences. The existing system of issuing labels to passengers is open to abuse as labels may easily be copied. Embodiments of the present invention enable a manifest to be kept that links bags to passengers. As this information is captured as the passengers embarks, bags can be validated before departure and rogue bags eliminated.

Embodiments of the invention may have the advantage of providing a low cost and robust tracking system for environments having limited infrastructure or resources. Embodiments of the invention avoid the need for high cost tracking equipment.

Embodiments of the invention have the advantage of providing baggage tracking solutions in the cruise ship environment where there is often limited infrastructure. For much of a cruise a ship is out of high bandwidth communication with the shore and the ability to send baggage related messages is very limited. Embodiments of the invention overcome this problem by only requiring communication with land or cloud based systems when the ship is at or near a port.

In some embodiments the baggage identifier fixed to the baggage may a bag tag, an RFID or a BLE beacon. The or each location identifier may be a bar code or a GPS module. The location information mat include a location code, a location text descriptor, or GPS/latitude and longitude coordinates.

The passenger identifier may comprises passenger related data retrieved from a passenger name record stored in the reservation system.

In one embodiment of the invention the item of baggage may be identified in the bag message as being unknown. This has the advantage of enabling the baggage tracking system to be integrated with airline baggage tracking systems even if the item of baggage is unknown in the airline context.

In one embodiment the steps of scanning are performed by one or more hand held scanning devices and/or by a scanning app running on a mobile communications device. Different types of scanning device and method may be used at different scanning points.

The step of generating a baggage tag may comprise generating the baggage tag electronically and sending the baggage tag electronically to the passenger. The step of updating the baggage message may comprise changing the status of the item of baggage in the baggage message.

In one embodiment, the step of updating the baggage message comprises generating and saving a new baggage message, the new baggage message having a different baggage status from the previous baggage message.

Embodiments of the invention may comprise, on boarding the ship, the passenger scanning a touchpoint with a scanning app loaded on a mobile communications device, and communication a signal to update the status of the baggage message permitting delivery of the passenger's bags to their cabin.

In one embodiment, scanning of the baggage tag prior to arrival at a port and prior to loading of the baggage into a baggage container comprising sending a message indicating that the item of baggage is in the possession of the cruise operator.

In one embodiment, after associating the baggage container identifier with the baggage and sending an updated baggage message including the association, a message is sent to the passenger's mobile communications device indicating the identity of the baggage container.

In one embodiment, the step of determining whether the retrieved identity matches the scanned baggage container identifier comprises, where the determination is that there not a match, sending an error message to the scanner operator indicating that there is no match.

DETAILED DESCRIPTION

Embodiments of the invention will now be described, by way of example only, with reference to the accompanying drawings, in which:

Figure 1 shows a schematic diagram of a mobile tracking system;
Figure 2 shows an example graphical user interface (GUI) displaying a location barcode preview;
Figure 3 shows an example GUI displaying a location notification;
Figure 4 shows an example GUI displaying a notification that a user may begin obtaining article information by scanning an article identifier;
Figure 5 shows an example GUI which displays a scanner preview window in addition to the notification that a user may begin scanning an article identifier;
Figure 6 shows an example GUI which displays a request for additional information related to the article being scanned;
Figure 7 shows the example GUI of figure 6, including additional information related to the article being scanned;
Figure 8 shows the example GUI of figures 6 and 7, including further additional information related to the article being scanned;
Figure 9 shows an example GUI which displays scanned articles that have been provided with the additional information of figure 8;
Figure 10 shows an example GUI which displays information associated with a first article;
Figure 11 shows an example GUI which displays information associated with a second article;
Figure 12 shows an example GUI which displays information associated with a third article;
Figure 13 shows an example GUI which displays options to clear data stored by the mobile application;
Figure 14 shows a first schematic flow diagram for a user obtaining tracking history of an article;
Figure 15 shows a second schematic flow diagram for a user obtaining tracking history of an article;
Figure 16 is a flow chart illustrating steps in an embodiment of the invention;
Figure 17 is a screen shot showing a central record of the embarkation process: and
Figure 18 is a similar screen shot to Figure 17 showing the disembarkation process.

Within the cruise ship industry there are presently few solutions available for ensuring that the correct bags are loaded onto the correct ship. Moreover there are no provisions for the counting of bags or the correlation of bags. Thus although the cruise company may know that a passenger has checked in bags, they may not know how many. This can lead to confusion and in some cases, the cruise company being unable to determine whether they have mislaid one or more bags of a passenger. It also poses security concerns.

Once bags have been handed over by a passenger, the cruise company presently has no mechanism for informing the passenger where the bags are located. Some bags will be with the passenger in their cabin while others will be in storage in one of a number of holds.

As cruise ships increase in size and passenger capacity this becomes an ever increasing problem. The largest cruise ships can carry over 6000 passengers.

At the end of a voyage, baggage reconciliation is a problem. Typically on arrival, bags are unloaded and then arranged on the quay in deck order. Passengers have to search for their own bags from all the bags for their deck. Even in the absence of errors in the relevant decks, this is a slow and laborious process. It is inconvenient both for the passengers and the port operator. As the size of cruise ships increases, quay side space also becomes limited.

The system described below addresses these problems and uses a series of messages known in the aviation industry for baggage handling. These messages, known as BIMs (Baggage Information Messages) include BSMs ((Baggage Source Messages) and BPMs (Baggage Processed Messages). In the detailed example below, the BSM is described in detail in relation to a bag whose identity is known. However the BSM can also be used to describe a bag of unknown origin. In an embodiment of the present invention, this message format is used for bags that relate to a cruise ship. They are unknown in the sense that they are unknown only in the aviation environment.

Before describing the application of the BSM to the cruise ship industry there will first be described a method and system which utilises BSMs for baggage tracking in the airline industry. The application of this system to the cruise line industry will then be described. It will be appreciated that the methods and systems described below in the context of the airline industry are illustrative examples that do not form part of the claimed invention, but that the methods and systems may be adapted to the cruise ship industry to form embodiments according to the invention as further described below.

Presently, bags are tracked in the airline industry using 1-d laser barcode scanners and Baggage Information Messages (BIMs), which are sent between departure control systems and automated baggage handling systems. The BIMs are sent, received and processed by the airport departure and baggage handling systems in order to achieve automated baggage sortation, passenger and baggage reconciliation, and other baggage services.

Bag information included in the BIMs is linked with a 10-digit bag tag number defined as the Licence Plate Number (LPN). This 10 digit LPN is issued during check-in and is used to create a unique reference to a specific bag. The airport systems receive this 10 digit LPN in a baggage message and store the LPN for use as a reference when communicating to other airport systems. The LPN is represented on the 1-d laser barcode issued for a checked bag.

There are several different types of Baggage Information Messages, including Baggage Source Messages (BSMs) and Baggage Processed Messages (BPMs).

The BSM provides information for processing baggage by automated baggage systems. For example, a BSM will be generated by an airline Departure Control System when a passenger checks in a bag for a journey, when a bag must be transferred to a different flight, and when a bag has been mishandled.

An example of a BSM in teletype format is shown below. Data contained within the BSM may be sourced from baggage handling systems, or other systems storing passenger information.

| MESSAGE CODE LINE | MESSAGE LINE DESCRIPTION |
|---|---|
| BSM<≡ | Standard Message Identifier |
| .v/1LZRH<≡ | Version 1; Local baggage at Zurich Airport (ZRH) |
| .F/BA101/18APR/JFK/F<≡ | Outbound carrier and flight; Date; Destination; Class |
| .N/0125**23456**003<= | LPN - IATA airline code; Baggage number (underlined); Number of consecutive tags |
| ENDBSM<≡ | End of Message identifier |

In the above example the second line, which begins .V, defines the current location of the bag, Zurich, and indicates the bag has originated there.

The third line, which begins .F, defines the itinerary. In this case, a bag has been checked onto British Airways flight number BA101 to JFK International Airport on 18 April and belongs to a first class passenger. Itinerary data is mandatory in BSMs for originating baggage, as in the above example, and transfer baggage. It is not included for a bag which has reached its terminating location.

In the fourth line, .N indicates the baggage LPN and the number of checked in bags belonging to the same traveller. The 1st digit is a leading digit which may be used by individual airlines to aid baggage identification. The 2nd to 4th digits (085) define a 3-digit IATA airline code. For example, 006 indicates Delta Airlines and 125, the example here, indicates British Airways. The 5th to 10th digits (underlined above) define a 6-digit baggage number associated with the bag at check-in. The final 3 digits indicate that 3 bags were checked in by the passenger. Thus, 3 LPNs are associated with this passenger:

$$LPN\#1 = 0125123456$$

$$LPN\#2 = 0125123457$$

$$LPN\#3 = 012523458.$$

The 6-digit baggage numbers are generated in sequential order and combined with a 3-digit IATA airline code and a customisable leading digit to create an LPN. Due to the large volume of passengers, airlines must reuse existing LPNs, and so a bag is uniquely identified by combining the date of travel with the ten digit LPN. Thus the LPN combined with the date of travel is an example of a unique baggage identity which is encoded in a bag tag which is an example of an article identifier.

BSMs are sent to provide information for processing of baggage by automated baggage systems. For example, a BSM may be sent when a bag tag is deleted, a bag is re-routed or a passenger's itinerary is changed.

BPMs are sent to communicate when a bag has been processed by a baggage handling system. For example, a BPM may be sent when the baggage handling system reports that a bag has missed a connection. BPMs come in two varieties: sortation messages and reconciliation messages. As before with BSMs, the data contained within a BPM may be sourced from baggage handling systems, or other systems storing passenger information.

BPM sortation messages are sent during various stages of the bag journey and enable baggage sortation systems to determine whether a bag has been correctly sorted. The sortation messages also include screening messages. Baggage screening systems are used by Transport Security Agents (TSAs) to check baggage, and a BPM is generated if the bag is approved.

BPM reconciliation messages are confirmation messages sent when a bag successfully completes part of the bag journey. For example, a BPM reconciliation message may be sent when a bag is correctly loaded onto or unloaded from an aircraft.

Examples provide an article scanning and tracking system using a multi-protocol API connected to a cloud platform via a network. Where the article is an item of baggage, the system can be used for remote baggage tracking, as further described below.

As shown in figure 1, a system 100 includes: a bag tag 101 associated with a bag 102 to form a tracked article 103; a mobile device 104; a cloud platform comprising an API Service 105, an API Data Processor 106, a Transform service 107, a Data Store 108, and a Baggage Information Message (BIM) Processor 109; and an Airline Departure Control System (DCS) 110. The mobile device 104 includes a mobile application for communicating with the API service.

During the check in process, the Airline DCS 110 sends messages 112 including passenger-related information to the BIM processor 109 and for storing in a data store as a passenger name record (PNR). Examples enable bag location information to be amalgamated with existing PNR data by sending messages 111 including bag location information from the mobile device 104 to the cloud platform via the API service 105, as further described below. A message 113 is generated including tracking information and passenger-related information and stored in data store 108. Providing the functionality of the API on a mobile application allows an airport to provide bag scanning and tracking functionality using a mobile device, thereby reducing the costs and infrastructure requirements for tracking a bag.

When a bag 102 is checked in, the airline generates a paper bag tag 101 which includes a licence plate number (LPN) associated with the baggage article. The check-in event generates a Baggage Source Message (BSM) in the airline's Departure Control System (DCS) 110. The example BSM 112 shown in figure 1 is detailed below.

```
BSM
 .V/1LATL
 .F/XS1234/18APR/JFK/F
 .O/XS5678/18APR/LHR/F
 .N/0950457116001
 .S/Y/3A/C
 .P/COOPER/ANDREW
 .L/2PK03
ENDBSM
```

In the above example, the BSM 112 provides the following passenger-related information and instructions for ground handlers.

".V/1LATL" provides version information, including the source of the baggage article and the airport the BSM was generated at. In this example, the BSM 112 was generated at Atlanta airport and the bag 102 is local, i.e. it has not been transferred from elsewhere.

".F/XS1234/18APR/JFK/F" provides flight information, including flight number, the date of the flight, the destination airport and seat class. In this example, the bag 102 is associated with a passenger travelling on flight XS1234 on 18April to John F. Kennedy International Airport with a First Class seat.

".O/XS5678/18APR/LHR/F" provides information relating to any onward or connecting flights, including the onward flight number, onward flight date, destination and seat class. In this example, the bag 102 needs to be loaded onto connecting flight XS5678 on 18 April to London Heathrow Airport.

".N/0950457116001" provides the bag tag information, which includes a 10 digit LPN and the number of articles checked in by the same passenger. In this example, the LPN is 0950457116 and only one bag 102 was checked in by the passenger.

".S/Y/3A/C" provides baggage reconciliation information, including whether a bag 102 is authorised to be loaded, the passenger's seat number and the passenger's status. In this example, the bag is authorised to be loaded onto the plane, the passenger has checked in and will be seated in seat 3A.

".P/COOPER/ANDREW' provides passenger name information.

Finally, ".L/2PKO3" provides passenger name record (PNR) address information.

The BSM 112 containing the above information is sent to the cloud platform via message routers from the Airline DCS 110 and is processed by a BIM Processor 109. The BIM processor 109 stores the baggage event in the cloud Data Store 108. Accordingly, the Data Store 108 contains a record of the information provided by the BSM 112.

After check-in, the bag tag 101 associated with the bag 102 may be scanned by the mobile device 104 at various scan locations. In some examples, the scan locations define points of interest on a bag journey. For example, a point of interest on a bag journey may be a plane-side loading point where baggage is stored before being loaded onto an aircraft.

Scanning the bag tag 101 with the mobile device 104 retrieves the LPN associated with the bag 102 from the bag tag 101. In some examples, the mobile application generates a message 111 including article information related to the bag and location information related to the current location of the bag and sends the message to the API service 105 via the network. Alternatively, the message 111 may be delivered to the API service 105 via WIFI, 3G, LTE or any other wireless connectivity means.

In some examples, the article information is electronically readable to enable the mobile device to obtain the article information. For example, article information may be obtained by scanning an article identifier. The article information included in the message 111 preferably contains the LPN which functions as a unique bag identity. Similarly, location information related to the current location of a bag may be obtained from a location identifier associated with a point of interest on a bag journey using the mobile device. In a specific example, the identifier may be a tracking location barcode placed at a key location during a bag journey which is scanned by the mobile device. For example, a location barcode may be placed next to each arrivals carousel.

An example format of a tracking location barcode is:

AAAEEEEEEEELLLLLLLLLLUCT

In the above example, "AAA" is an airport code. "EEEEEEEE" is an 8 character event type, which is passed to the API as "tracking_id." "LLLLLLLLLL" is a 10 character location, which is passed to the API as "tracking_location." "U" is an instruction for an unknown bag. The instruction may be to ignore the unknown bag or to input flight data. "C" is a container input instruction. In some circumstances, a further barcode reading of a container ID is required after scanning a tracking point. "T" is the type of scan event to be performed. For example, the scan event may be loading or tracking.

In alternative examples, the identifier associated with a point of interest may be encoded in a short-range radio signal located at the point of interest.

Enabling the mobile device to scan the bag tag associated with a bag and the identifier associated with a point of interest enables accurate tracking information to be sent to the cloud platform API service 105 via an API payload. The example API payload 111 of figure 1 is detailed below.


```
{
  "service_id": "12"
  "airport_code": "ATL"
  "tracking_point_id": "PAXACC"
  "tracking_location": "BLOADFIV"
  "LPN": "0950457116"
  "timestamp": "2016-04-18T15:01:23.3Z
}
```


In the above example, "service_id" defines the unique identification number which may be associated with a particular third party such as a customer or contractor. Including "service_id" enables the system to verify that requests or calls to the cloud system are from a known source. "airport_code" defines the airport where the LWBIM was generated. In this example, the airport is identified as Atlanta airport. "tracking_point_id" defines the type of baggage handling event being recorded, and may be associated with a text descriptor. In this example, "PAXACC" may be matched against an internal event code, which indicates that a passenger has accepted the bag at baggage reclaim. "tracking_location" defines the location of where the scan occurred. The tracking location, "BLOADFIV" in this example, may be associated with a location descriptor, "B Load Five" in the present example, or GPS coordinates. "LPN" defines the licence plate number and "timestamp" defines the time that the scan was made.

In alternative examples, location information could be GPS coordinates provided by a GPS module of the mobile device, or the location information could be manually input by a user.

The API payload 111 including the bag information may be sent to the cloud platform as a lightweight baggage information message (LWBIM). In a specific example, the API payload 111 is a LWBIM in JavaScript Object Notation (JSON) message format, as shown in the example API payload 111 above.

The cloud platform identifies the LPN from the LWBIM 111 and enriches the payload using the API Data Processor 106. In specific examples, the API data processor 106 requests passenger-related information associated with the LPN contained in the LWBIM 111 from the PNR database in Data Store 108. If any passenger-related information is retrieved from the PNR database then the LWBIM is enriched with the passenger-related information by the API Data Processor 106. For example, the cloud platform may retrieve flight information or historical location information from the Data Store 108.

To enable compatibility with legacy systems, the enriched LWBIM is converted into a BIM 113 by Transform service 107. Thus, the BPM contains tracking information received via the API service and passenger-related information via an external system such as the baggage handling system. The cloud platform then processes and stores the BIM 113 as part of a message chain associated with the bag in Data Store 108. This enables the cloud platform to serve requests by parties for the status of the bag at a particular stage during a journey.

Including location information enables the cloud platform to cross-reference the scanned information with information located in a Data Store 108. The LWBIM 111 may then be augmented with additional related information retrieved from the Data Store 108. In some examples, the retrieved additional related information includes stored physical location data associated with this location for reporting within the mobile application.

As mentioned above, legacy Airline Systems typically use teletype format messages. If compatibility with legacy systems is required, the LWBIMs, which may be in JSON format, must be converted into a BIM in teletype format as further described below.

First, the API Service 105 accepts the LWBIM message 111 and sends it to the API Data Processor 106. Secondly, the API Processor 106 retrieves information associated with the baggage article 102, including flight information, from the Data Store 108. This is done by using the LPN information included in the LWBIM 111. The API Processor 106 enriches the LWBIM 111 with the data returned from the Data Store 108 and sends the enriched event to the Transform service 107. In a final step, the Transform service 107 transforms the JSON format LWBIM 111 into a teletype BPM 113. Thus, the BPM 113 generated by the Transform service 107 is compatible with external legacy systems and includes baggage location data and passenger information data. The BPM 113 is returned to the API Data Processor 106 and sent to the Data Store 108 to be stored as a new baggage event. BPMs are industry-standard messages which are used by numerous legacy airline systems, such as departure control systems and automated baggage handling systems. Generating a BPM including article location information therefore enables examples to provide article tracking data to existing legacy systems or other third parties.

The example BPM 113 generated by the Transform service of figure 1 is detailed below.

```
BPM
 .V/1LATL
 .J/R/45S/PAXACC/18APR/1501L/BLOADFIV
 .F/XS1234/18APR/JFK/F
 .U/AKE67890LH
 .N/0950457116001
 .O/XS5678/18APR/LHR/F
 .P/COOPER/ANDREW
 .L/2PK03
ENDBPM
```

The API data processor matches the LPN provided by the LWBIM 111 with the LPN associated with known passenger-related data detailed in the BSM 112 sent by the baggage handling system. The Transform service 107 is therefore able to include incoming and onwards flights details, if such details exist, into the BPM. The .J element includes tracking data gathered by the mobile application and sent via the LWBIM 111, such as "tracking_id" and "tracking_location." The BPM 113 may also include a container identifier, if such data has been collected, in the .U element (not shown in figure 1). In the above example, the container is identified as "AKE 67890 LH".

In some instances, the API Data Processor 106 is unable to retrieve passenger related data from the data store 108 as there is no BSM associated with the particular LPN. This situation may occur if a particular airline has a problem with their network, or if smaller airports do not have access to the baggage handling systems. If passenger related data cannot be retrieved, then the mobile application will issue a prompt for the passenger related data, such as flight number and date of travel, to be entered manually as further described below.

Once written to the Data Store 108, the well-known concept of shadowing may be used to accumulate all the tracking data associated with a bag 102.

A ’shadow’ is a software copy of the physical bag tag containing a store of all historical data associated with the bag tag. The shadow may be stored in a cloud-based database and persists even if the system software crashes. The shadow can be replicated for use across different operating systems or hubs. The shadow may be queried to identify a particular bag tag and can return any historical data concerning the baggage article associated with that bag tag, including the most recent location data and LPN.

The shadow therefore contains a full history of the bag’s tracked location. A location tracking system could therefore interrogate the shadow, extract the stored tracking data associated with a bag and present the data to a user in a meaningful way.

In an example, the mobile application may send a notification to a passenger when a bag arrives at a specific location. For example, a notification may be sent when the bag arrives at a holding area to await being loaded onto an aircraft. The notification may include information relating to the bag's location and the time of arrival at that location. The notification may also include other information such as passenger details, the flight number and final destination.

Further examples may be embodied in a mobile application for use in the above described system. Examples enable the mobile application to create API payloads 111 including bag information and send the API payloads 111 to cloud platform API service 105. Examples also enable the mobile application to query the cloud platform about a bag's location history. In some examples, the mobile application is loaded onto a mobile device 104 having a scanning module and, in specific examples, the scanning module is a camera.

Figures 2 to 14 show an example graphical user interface (GUI) for a mobile application which may record and retrieve baggage tracking information.

To record bag location data, the mobile application prompts a user to enter a location. In some examples, the bag location may be entered by scanning a tracking point identifier, as shown in figure 2. In this case, the GUI displays a preview of the tracking point identifier, as viewed by the scanning module, to enable a user of the mobile application to successfully scan the tracking point identifier.

In the example shown in figure 2, the tracking point identifier is a 3 dimensional barcode 201. However, in alternative examples, the location information may be provided by any other suitable means, for example receiving a payload from a Bluetooth ® beacon, scanning an RFID, or obtaining the current GPS coordinates of the mobile device.

Scanning the tracking point identifier provides the mobile application with location information for associating with a bag to be scanned. If the mobile device successfully identifies the current location, a notification 301 may be displayed by the GUI. In the example shown in figure 3, the GUI identifies the current location as arrivals belt "Arrivals2." Displaying text descriptor of the current location may enable a user to quickly identify whether the scanned location correctly corresponds to their current location. The text descriptor may also be used as a placeholder for more detailed location information, such as GPS coordinates, by the cloud platform.

Once identified, the location information is valid for a limited period of time. In the example shown in figure 3, the location information is valid for approximately one hour. Any bag that is scanned within this time period will be associated with the current location, "Arrivals2." The GUI displays an indicia 302 indicating the current location and the time remaining before the location information needs to be updated. Validating the location information for a limited period of time beneficially prevents a user from continually re-entering location information, while also preventing the application from retaining old location data, which may no longer be accurate.

Once the mobile application has been provided with valid location information, the scanning module of the mobile device scans a bag tag 101 associated with a bag 102. In the examples shown in figures 4 and 5, the GUI may issue a notification 401 that a user may begin scanning bag tags. As shown in the example of figure 5, the GUI may display the notification to begin bag scanning 501 simultaneously with a scanner preview window 502 for enabling a user to align the scanner with a location identifier.

If a bag is known to the baggage handling system then the cloud platform may retrieve passenger-related information associated with the LPN of a particular bag from a BSM issued by the departure control system (DCS). There is therefore no requirement for a baggage handler to input the flight details for every bag that they process, hence advantageously saving time.

In some examples, the mobile application will be configured to request additional flight-related information. This may occur if passenger-related information associated with the baggage article being scanned cannot be retrieved, which occurs when the cloud platform does not contain a record of a BSM associated with a particular bag.

In that case, the mobile application detects that a bag is unknown on scanning the bag tag and will display a request for additional passenger-related information, as shown in the example of figures 6 to 8. This step is only required when there is no record of the bag in the cloud platform. In the example shown in figure 6, the additional passenger-related information is the flight number and date of travel. Figures 7 and 8 show how the user may provide this information to the GUI. However, the additional information requested by the GUI may not always be passenger related. In some examples, the GUI may request more specific location information, for example if the baggage may be loaded into a choice of loading containers the GUI may issue a prompt to scan the unique identifier associated with the particular loading container.

The mobile application retains the manually inserted location information and additional flight-related information and associates that information with the LPN associated with any unknown bags. In the example shown in figure 9, three unknown bags have been provided with the same location and flight-related information, namely flight number AF438 to Geneva Airport on 28 April 2017. Each scanned bag may be represented by a bag icon 901 which indicates the LPN associated with the bag to enable a user to distinguish between scanned bags and to correctly select a particular bag.

Once the mobile application has acquired the above bag information, the mobile application generates an API payload 111 including the bag information and attempts to send the API payload to the API service 105 via a network.

As shown in figure 9, the GUI may indicate whether the payload 111 has been successfully uploaded to the API service 105 by marking the bag icon associated with the bag with a tick 902. If the mobile application has been unable to upload the information associated with the bag, then the relevant bag icon is marked with a broken cloud 903. Failure to upload the bag information may be due to an error synchronising the bag data with the server. If a record of the LPN associated with the bag already exists in the cloud platform then the API data processor 106 may retrieve passenger-related data associated with the LPN and generate a BPM from the bag information obtained from the API payload 111 and the retrieved passenger-related data.

As shown in figures 10 to 12, the GUI may display information associated with a particular bag when a user taps on the relevant bag icon 901. In a first example shown in figure 10, the GUI displays information including the LPN and tracking location 1001, most recent location data 1002, passenger name data 1003, and flight-related data 1004. In this example, the GUI indicates that the LPN associated with the bag is 0220774669, the most recent location of the bag is "GTRAKONE", which is situated in TerminalAA, the bag is associated with Mr Peter Drummond, and the bag will be travelling on flight LX0099 on 6 January. In a second example shown in figure 11, the GUI indicates that the LPN associated with the bag is 0220774668, the most recent location of the bag is "GTRAKONE" in TerminalAA, the bag is associated with Mr Peter Drummond, the bag has previously travelled on flight LH0456 on 6 January and will be travelling on flight LX0099 on 6 January.

If an error occurs during bag scanning, an error message is displayed by the GUI. In the example shown in figure 12, the error message 1201 includes text 1202 indicating that the bag is a terminating bag and should not be loaded onto the plane. The example shown in figure 12 also includes current location information 1203 which indicates the container that the bag has been loaded into. In the specific example shown in figure 12, the bag is loaded into container "AKE 12345 LH."

The mobile application may enable a user to clear the location or flight information that is associated with each scanned bag at any time, as shown in figure 13. This enables a baggage handler to associate new location and flight information for bags associated with a different flight. These options may be accessed from a menu on the GUI.

The mobile application described above has the advantage of only requiring minimal data to be captured for a bag to be successfully recorded by a back end database.

Examples may be used to perform ’bingo sheet’ scanning. Here, a plurality of bag tag bar codes are stuck to a sheet of paper and all the bag tags can be recorded in a single scan. Thus, the steps of generating a message by combining the article information with the location information; b. applying a timestamp to the message; and c. transmitting the timestamped message via a transmitter of the mobile device; can be performed sequentially for a plurality of bag tags in a very short time in a single scanning action.

The mobile application GUI described above has the advantage of having a minimalist design, enabling a handling agent to focus on moving and scanning bags without needing to input manual data, apart from in exceptional circumstances, as there is no need to navigate into menus or complex settings.

The above systems and methods may be used to enable a user to upload bag location information to a cloud platform, but may also be used to retrieve information from the cloud platform. For example, the mobile application can retrieve a status summary for the bags associated with a particular flight. Entering a particular flight number, for instance flight number "BA078", would result in obtaining status information for the bags associated with that flight. This may be achieved by sending an API request for the relevant flight and location data stored in data store 108 associated with that flight number. The status summary may provide the number of bags check in for the flight, the number of transfer bags received from other carriers which are due to be loaded onto the flight, the number of bags loaded onto containers due to be loaded into the aircraft, and the number of bags already loaded into the aircraft. This advantageously enables bag handlers to know whether any more bags are expected at any given time.

The mobile application can also be used to retrieve information associated with a particular bag, as described below with reference to the schematic workflows of figures 14 and 15.

Figure 14 shows an example schematic workflow 1400 for a member of airport staff querying the location of a particular bag using the mobile application.

In a first step 1401, a location identifier is scanned by a baggage handler. In this example, the location barcode is located at a first airport and is associated with a point of interest on a bag journey. In the specific example shown in figure 14, the location identifier is a barcode located at a plane-side loading point. In a second step 1402, a bag tag is scanned by the baggage handler. As before, scanning the bag tag retrieves an LPN associated with the bag. The LPN and bag location information are amalgamated and sent to the cloud platform as described above. In a third step 1403, the bag status is queried by staff at the destination airport. In this example, a passenger’s bag may have been sent to the wrong destination. When arriving at their destination airport, which may be different to the first airport, the passenger may ask a member of staff at the destination airport the current location of their bag. The member of airport staff at the destination airport may use the mobile application to request the location information using the passenger’s LPN or other passenger-related data. In a final step 1404, the bag event history is shown, with most recent event being the bag loaded onto the plane. The cloud platform database may return additional information relating to the last known scan location, including a text descriptor of the scan point, the latitude and longitude GPS coordinates of the scan location, and the scan time. In this example, the member of staff would be able to use the mobile application and tracking system to provide some peace of mind to the passenger by correctly informing them that their bag has been loaded onto the next flight to the destination airport.

Figure 15 also shows an example schematic workflow 1500 for a member of airport staff querying the location of a particular bag using the mobile application to inform a passenger of their bag status.

In a first step 1501, a passenger complains their bag has not appeared on a carousel. In this example, a passenger's bag may have arrived at the destination airport, but may have been misplaced on the way to the arrivals bag carousel. In a second step 1502, staff query the database using bag tag data. The airport staff may use the mobile application to search for bag location information associated with an LPN, or other passenger-related data. In a third step 1503, staff can report last bag event, to confirm if the bag has been lost, or is still being unloaded, etc. In this example, the member of staff would be able to use the mobile application and tracking system to provide current information to the passenger. This provides a degree of certainty to the passenger so that they may either continue to wait to reclaim their bag, or to notify another member of staff that their bag is lost.

Examples have the advantage of improving on currently available systems by simplifying the process of "on-boarding" tracking services at locations currently not served with adequately required infrastructure, as well as locations who wish to extend their tracking capabilities at significantly reduced cost and effort. It also provides the advantage of creating more "portable" tracking opportunities due to the light-weight nature of the interface and numerous network connectivity options. A further advantage is that the claimed invention interfaces with legacy technology. This allows "modern" aspects of the network, such as mobile-based scanning, to interface with existing legacy infrastructure and to make use of the information within the legacy systems.

In the air transport industry, there is a well measured anxiety about the possibility of checked baggage being lost, stolen, delayed, or damaged. Although these eventualities are rare, passengers remain unaware of the precise location and status of their baggage throughout much of their journey. Examples therefore have the advantage of reassuring passengers that their baggage has been processed properly by sending baggage status notifications to a passenger through a mobile application.

In another example, the API Data Processor 106 may also send the generated BPM 113 to baggage handling systems or other systems storing passenger information. Sending BPMs to baggage handling systems enables examples to effectively communicate data associated with tracking a baggage article to existing systems.

The above detailed description of examples are not intended to be exhaustive or to limit the invention to the precise form disclosed. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

**Cruise Ship Application**

Having described examples with respect to the airline industry, the following description explains how the system described above may be adapted for use in cruise ship applications according to the claimed invention. Reference is made to figure 16 which is a flow chart showing the steps in the process to be described.

At step1600 the cruise operator provides bag tags having a 2D barcode to each passenger in advance of the voyage. A passenger may have a number of bag tags but the tags each include a unique passenger ID and a unique bag ID enabling each bag to be identified and tied to an individual passenger. The cruise operator then, at step 1602, generates and sends a Bag Source Message (BSM) to the departure control system 110 (Figure 1). The DCS 110 is now replaced by a Cruise Reservation System but otherwise functions in the same way as the airline DCS 110. The BSM is in the form described above, but instead of indicating the flight details for which the bag is associated it will indicate that the baggage is unknown in the context of the aviation environment. The BSM will, however, indicate the name of the passenger, the cruise they are booked onto, the cabin number, booking reference, a unique ID, which is the LPN of the earlier example, and a timestamp. The cabin number may simply replace the seat number in the airline BSM example. In practice, when the message is originally sent it will include the LPN, time stamp and a tracking point id. The system replies with an unknown bag message as it will not correspond to a known flight in the system at which point a further message is sent which corresponds to flight details, on in this case cruise details, such as voyage number, date and type. The type might be an arrival or a departure indicator. If these details are not already known to the system a message is sent to the passenger asking them to input their details.

Table 1 below compares the fields in an airline message with those in the cruise message.

Table 1

| Airline Message | Cruise Message |
|---|---|
| Passenger name | Passenger Name |
| PNR Number | Cabin Number |
| Airline | Cruise line |
| Flight Number | Cruise number |
| Departing Station | Embarkation Port |
| Arrival Station | Disembarkation Port |
| Bag Tag Number | Luggage Lable Number |

On receipt of the bag tags, the passenger prints the tags, if they have been sent in electronic format at step 1604. Alternatively the tags may be sent to the passenger by mail, for example along with other information about their reservation. The tags preferably include a 2D bar code which includes the unique bag number identifier and passenger information. When the passenger arrives at the port with their bags, the bags are each scanned at step 1606 with a mobile communications device or a dedicated scanner in the manner described above and the status of each bag is updated via a BSM as described above to indicate that the bag(s) have been checked in. As a BSM as already been issued for each bag, the bag data retrieved by the scan is validated against the original BSM to ensure that it tallies. At this point the system may create a new BSM with the updated status or update the existing BSM. At this point the cruise operator knows the identity of the bags that are on board the vessel unlike existing systems.

As the passenger, who has now handed over their bags, boards the ship, they may scan a touch point with their mobile device having a passenger app loaded. Passenger details are read from the device by the system which can push data to the app. At a point when the passenger's bags have been delivered to their cabin, the system pushes a message, at 1608, to the passenger informing them that their bags are at their cabin and that the passenger may now go to their cabin. Bags are delivered by a porter who scans the bags and a location identifier arranged on or near the cabin door at 1610 to indicate that the bags have been delivered to the cabin. The status of the bag is again updated via a BSM which is sent back to the central system. This is one example of how the location of the bag can be tracked throughout the voyage. It is possible to include as many touchpoints as is considered necessary. In the airline industry, the touchpoints at which an airline must track baggage are regulated by IATA Resolution 753. However this does not apply to the maritime environment which gives cruise operators latitude to introduce as many touch points as they consider beneficial.

It is presently preferred that messages from the system to passengers are sent via a dedicated app, which may be downloaded by the passenger from any suitable venues, such as Apple ® App Store, Google Play ® or other similar venues. Alternatively the system could communicate with passengers by pushing SMS, instant messaging or email or any other messaging protocol. In either case, as translator is required between the Bag messages and the messaging application to translate the message into text that can be understood by the passenger. However, such translators are known to those skilled in the art.

As a cruise liner approaches a destination port, typically the night before, passengers leave their bags outside their cabins for collection. They are collected, taken to the hold and loaded into cages in deck order. At step 1612 the bag collection provides a touchpoint so that the system knows that the bags are again in the possession of the cruise operator. The bags are scanned again when they are loaded into the cage and a location identifier on the cage is also scanned so that a message can be sent that identifies a given bag with a particular cage. This message may be sent both to the system and pushed to the passenger.

When the ship arrives in port, bags are typically unloaded by forklift truck onto the quayside and taken into the customs hall where they are emptied forming very large lines of bags arranged in deck order. In an embodiment of the invention the bag has already been associated with a cage location and that information has been pushed to the passenger's app on their mobile device so that the passenger knows where to find their bags. As the bags are unloaded from the cages, they are scanned again at 1616 together with the cage identifier, which may be a barcode mounted on a card fixed to the cage. If the scanned cage number does not agrees with the cage number that is associated with the bag, the scanner returns an error message to the user who can then determine the correct cage number and return then bag to the correct location for bags unloaded from that cage. This greatly reduces the time that can be wasted searching for mishandled bags which is a very significant problem on larger cruise liners that can be handling in excess of 10,000 bags on a single voyage.

As the passenger leaves the baggage hall, having collected their bags, the bags are scanned again indicating that the cruise operator no longer has responsibility for the bags. The scanner may again update the status of the bag to 'retrieved'. This step can greatly assist the cruise operator in the prompt and efficient unloading of bags. On larger ships, where quay space is limited, it is necessary to unload bags one deck at a time and not to place bags from a new deck on the quay until the previous deck has been fully or almost fully collected. Similarly, passengers are disembarked one deck at a time so that the only passengers on the quay should be those from the deck the bags of which are on the quay. This is necessarily a time consuming process. By scanning bags as passengers exit the customs hall, the system knows how many bags remain and can calculate whether it can allow the next deck of passengers to disembark. This improves the speed and smoothness of disembarkation and baggage collection and may lead to a great improvement in passenger experience. Moreover, as the cruise operator now knows exactly how many bags they are carrying, they can advise the port in advance of the baggage load so that the port can assess the staffing required to handle the disembarkation.

As mentioned above, the architecture for the cruise ship application is very similar to that of the airline application of figure 1. The Airline DCS is replaced by the Cruise Reservation System which, itself, is well known. The data store 108 is preferably located in the Cloud and no dedicated local storage need be provided on the ship. As cruise ships may not always be in contact with the data base, for example when they are in the middle of an ocean, it is important that the scanners have sufficient storage to hold data offline.. Although a cruise liner will have the ability to communicate with the shore, it may be limited and slow. Moreover, it may not be possible to prioritise bag related messages over other messages sent by the ship making communications with the data store unreliable and, therefore undesirable, for large parts of a cruise. When a ship approaches a port, there will be a transition point, for example on docking, when control passes back to the main ground based system. At that point, the scanners can connect with the data store and go back on line again. It will be appreciated from the description above that the majority of the steps in figure 16 are performed when the ship is docked.

While the ship is at sea, messages may be passed internally within the ship using the ship's on-board Wi-Fi although this is typically of low bandwidth and reliable.

Any suitable scanner may be used to scan bar codes on bag tags and location identifiers. For example a scanner app on a mobile device may be used. Many such apps exist and are known to those skilled in the art. Alternatively dedicated Bluetooth ® scanners may be used as a cheaper option. Such scanners are also very well known to those skilled in the art. Glove scanners may be used, or other wearable scanners in which the scanner is mounted on a glove or other article of clothing, facilitating scanning. Where the scanner is being used to scan large numbers of articles it may be preferred to use a more rugged protected device such as the DataMan ® 8050 series handheld barcode reader provided by Cognex, Inc of Natick MA, USA. Such a scanner is able to scan barcodes for a distance of up to 10m and store data and is therefore highly suited to this environment. Many other similar scanners are available and may be used. Alternatively, cameras, such as those in mobile devices such as phones and tablets may be used to capture and process bar codes. However, scanners are presently considered to be more accurate and reliable. Scanners such as the Cognex Dataman series have rechargeable batteries with a time between charging in the order of 10 hours making them well suited to the present environment.

As mentioned above, the architecture of the system is very similar to that of Figure 1. On board ship, the system may be administered from a central administration room. Figures 17 and 18 are screen shots showing the information that is available to a system user either from a land based control room or a shipboard administration room. In each case the screen shows the event history of a particular bag tag. Figure 17 shows the embarkation process whereas Figure 18 shows the disembarkation. In each case the bag tag is identified as 0BA474187 and the cruise is scheduled to depart on 23 October 2018. The passenger is identified as Mr David Munro and his passenger number is K3RVTJ. In these examples the display is based on an airport display and the references to flight numbers may be ignored. This display illustrates that on 23 October 2016 at 05:50 a bag was checked in. This means that the bag was presented by the passenger, the bag tag was scanned and a BIM message created for the bag which was sent to the system. The entry for 05:40 shows the existence of the BIM and the passenger status (checked-in) and the passenger number. The display also shows that the luggage was loaded to the ship at 08:15 and delivered to the passenger's cabin at 08:16. For each of these messages, for information can be obtained by the user by clicking on the information tab in the BIM column.

At the top of the display is an indication that the bag has been checked in and delivered to the passenger.

Similarly, the disembarkation screen of figure 18 shows that the bag has been delivered to the passenger and that the steps at which the bag tag has been scanned and a bag movement recorded are: collection of the bag from the cabin; offloading of the bag from the ship; delivery of the bag to customs; and delivery of the bag to the passenger following customs.

Embodiments of the invention have many advantages over the prior art. For example, they provide for greatly increased security over that which is available at present on cruise liners. Unlike existing systems, embodiments of the invention enable the cruise operator to know exactly how many bags are on board the ship and each bag has a unique identifier. At present, bags on cruise ships have a label which identifies the passenger name, cabin number and cruise but there is no central recordal of that information. Embodiments of the present invention provide a unique identifier which links a bag to and individual passenger in a manner that can be read and accessed centrally by an administrator.

Embodiments of the invention also increase security with respect to potential smuggling and terrorist offences. The existing system of issuing labels to passengers is open to abuse as labels may easily be copied. Embodiments of the present invention enable a manifest to be kept that links bags to passengers. As this information is captured as the passengers embarks, bags can be validated before departure and rogue bags eliminated.

Embodiments of the invention also have the advantage of enabling the bag handling process to be streamlined throughout the entire cruise. However, it is particularly advantageous at when passengers are collecting bags at the arrival port. As mentioned above, the linking of bags with cages enables mishandled bags to be identified and correctly stored potentially saving a lot of time at the quayside. This, and other efficiencies provided by the system enable passengers to be processed more rapidly at the arrival port decreasing disembarkation times which is advantageous to the passengers, the port operator and the cruise operator. Moreover, as the port operator can now have advance knowledge of the number of bags a ship is carrying it can make an appropriate assessment of what resources are required to handle the ship so increasing the efficiency with which the arriving ship is dealt and avoiding unnecessary or insufficient staffing.

## Claims

1. A method of tracking baggage on a cruise ship, comprising the steps of:
   for an item of baggage associated with a passenger, generating and associating a unique baggage identifier with a unique passenger identifier to form a combination identifier, the passenger identifier being retrieved from a reservation system, the combination identifier comprising an indication of the cruise line and a unique reference number for the item of baggage, the name of the passenger, a cruise voyage number, voyage date, arrival or departure indicator, and cabin number; generating (1602) and storing a baggage message including the combination identifier; generating (1604) a baggage tag including the combination identifier and affixing the baggage tag to the bag;

      prior to embarkation of the passenger onto the cruise ship:
      scanning (1606) the baggage tag with a scanning device to read the combination identifier, validating the combination identifier against the stored baggage message to enable check-in of the baggage and updating the baggage message;
      on delivery of the baggage to a passenger's cabin:
      scanning a location identifier in the region of the cabin with a scanning device and notifying (1608) the passenger via a mobile application stored on the passenger's mobile device that the baggage has been delivered to their cabin, and updating (1610) the baggage message with the status of the bag;
      prior to arrival at a destination port:
      scanning (1612) the baggage tag and updating the status of the baggage message; loading the baggage into a baggage container, scanning (1614) a baggage container identifier and associating the baggage container identifier with the baggage and sending an updated baggage message including the association;
      on unloading of the baggage containers at a port:
      for a given item of baggage, scanning (1616) the baggage container identifier in which the item of luggage is held and the baggage tag of the item of baggage with a scanning device, retrieving the associated baggage container identifier for the item of baggage and determining whether the retrieved identity matches the scanned baggage container identifier;
      on departure of the passenger from the port:
      scanning (1618) the item of baggage and updating the status of the baggage in the baggage message to indicate that the baggage has left the port.

2. A method according to claim 1, wherein the baggage identifier fixed to the baggage is a bag tag, an RFID or a BLE beacon.

3. A method according to claim 1 or 2, where the or each location identifier is a bar code or a GPS module

4. A method according to claim 3, wherein the location information includes a location code, a location text descriptor, or GPS/latitude and longitude coordinates.

5. A method according to any preceding claim, wherein the passenger identifier comprises passenger related data retrieved from a passenger name record stored in the reservation system.

6. A method according to any preceding claim, wherein the item of baggage is stored in the bag message as being unknown.

**7.** A method according to any preceding claim, wherein the steps of scanning are performed by one or more hand held scanning devices.

**8.** A method according to claim 7 wherein one or more of the scanning steps are performed by a scanning app running on a mobile communications device.

**9.** A method according to any preceding claim, wherein the step of generating (1604) a baggage tag comprises generating (1604) the baggage tag electronically and sending the baggage tag electronically to the passenger.

**10.** A method according to any preceding claim, wherein the step of updating (1610) the baggage message comprises changing the status of the item of baggage in the baggage message.

**11.** A method according to any of claims 1 to 10, wherein the step of updating (1610) the baggage message comprises generating and saving a new baggage message the new baggage message having a different baggage status from the previous baggage message.

**12.** A method according to any preceding claim, comprising, in boarding the ship, the passenger scanning a touchpoint with a scanning app loaded on a mobile communications device, and communication a signal to update the status of the baggage message permitting delivery of the passenger's bags to their cabin.

**13.** A method according to any preceding claim, wherein the scanning (1612) of the baggage tag prior to arrival at a port and prior to loading of the baggage into a baggage container comprising sending a message indicating that the item of baggage is in the possession of the cruise operator.

**14.** A method according any preceding claim, after associating the baggage container identifier with the baggage and sending an updated baggage message including the association, sending a message to the passenger's mobile communications device indicating the identity of the baggage container.

**15.** A method according to any preceding claim, wherein the step of determining whether the retrieved identity matches the scanned baggage container identifier comprises, where the determination is that there not a match, sending an error message to the scanner operator indicating that there is no match.

**16.** A system for tracking baggage on a cruise ship, comprising:

for an item of baggage associated with a passenger, software for generating and associating an unique baggage identifier with a unique passenger identifier to form a combination identifier, the passenger identifier being retrieved from a reservation system, the combination identifier comprising an indication of the cruise line and a unique reference number for the item of baggage, the name of the passenger, a cruise voyage number, voyage date, arrival or departure indicator, and cabin number;
software for generating (1602) and storing a baggage message including the combination identifier in a data store;
software for generating (1604) a baggage tag including the combination identifier for affixing to the bag;
a scanning device for scanning (1606) the baggage tag prior to embarkation of the passenger onto the cruise ship to read the combination identifier, the scanning device including software for communicating with the data store to validate the combination identifier against the stored baggage message, thereby to enable check-in of the baggage, and for updating the baggage message;
a scanning device for scanning a location identifier arranged in the region of the passenger's cabin, the scanning device including software for notifying (1608) the passenger via a mobile application stored on the passenger's mobile device that the baggage has been delivered to their cabin, and for updating (1610) the baggage message stored in the data store with the status of the bag;
a scanning device for scanning (1612) the baggage tag prior to arrival in a port having software for updating the status of the baggage message;
a scanning device for scanning an item of baggage on loading into a baggage container for delivery to a quay, and for scanning (1614) a baggage container identifier, the scanner having software for associating the baggage container identifier with the baggage and for sending an updated baggage message including the association to the data store;
a scanning device for scanning (1616) the baggage container identifier in which the item of luggage is held and the baggage tag of the item of baggage with a scanning device as the item of baggage is unloaded from the baggage container, the scanner including software for retrieving the associated baggage container identifier for the item of baggage and determining whether the retrieved identity matches the scanned baggage container identifier;
a scanning device for scanning (1618) the item of baggage on departure of the passenger from the port and having software for updating the status of the baggage in the baggage message to indicate that the baggage has left the port.

**Patentansprüche**

1. Verfahren zum Verfolgen von Gepäck auf einem Kreuzfahrtschiff, das die folgenden Schritte beinhaltet:

    Erzeugen, für ein mit einem Passagier assoziiertes Gepäckstück, einer eindeutigen Gepäckkennung und Assoziieren derselben mit einer eindeutigen Passagierkennung, um eine Kombinationskennung zu bilden, wobei die Passagierkennung von einem Reservierungssystem abgerufen wird, wobei die Kombinationskennung eine Angabe der Kreuzfahrtgesellschaft und eine eindeutige Referenznummer für das Gepäckstück, den Namen des Passagiers, eine Kreuzfahrtreisenummer, ein Reisedatum, eine Ankunfts- oder Abfahrtsangabe und eine Kabinennummer umfasst; Erzeugen (1602) und Speichern einer Gepäcknachricht, die die Kombinationskennung enthält; Erzeugen (1604) eines Gepäckanhängers, der die Kombinationskennung enthält, und Anbringen des Gepäckanhängers an dem Gepäckstück;
    vor dem Einschiffen des Passagiers auf das Kreuzfahrtschiff:

        Scannen (1606) des Gepäckanhängers mit einem Scangerät, um die Kombinationskennung zu lesen, Validieren der Kombinationskennung gegenüber der gespeicherten Gepäcknachricht, um das Einchecken des Gepäcks zu ermöglichen, und Aktualisieren der Gepäcknachricht;
        nach Abliefern des Gepäcks in der Kabine eines Passagiers:

            Scannen einer Ortskennung in der Region der Kabine mit einem Scangerät und Benachrichtigen (1608) des Passagiers über eine auf dem Mobilgerät des Passagiers gespeicherte Mobilanwendung, dass das Gepäck in seiner Kabine abgeliefert wurde, und Aktualisieren (1610) der Gepäcknachricht mit dem Status des Gepäckstücks;
            vor Ankunft in einem Zielhafen:

                Scannen (1612) des Gepäckanhängers und Aktualisieren des Status der Gepäcknachricht; Laden des Gepäcks in einen Gepäckcontainer, Scannen (1614) einer Gepäckcontainer-Kennung und Assoziieren der Gepäckcontainer-Kennung mit dem Gepäck und Senden einer aktualisierten Gepäcknachricht einschließlich der Assoziation;
                nach dem Entladen der Gepäckcontainer in einem Hafen:

                    Scannen (1616), für ein bestimmtes Gepäckstück, der Kennung des Gepäckcontainers, in dem das Gepäckstück untergebracht ist, und des Gepäckanhängers des Gepäckstücks mit einem Scangerät, Abrufen der assoziierten Gepäckcontainer-Kennung für das Gepäckstück und Feststellen, ob die abgerufene Identität mit der gescannten Gepäckcontainer-Kennung übereinstimmt;
                    nach Abreise des Passagiers aus dem Hafen:
                    Scannen (1618) des Gepäckstücks und Aktualisieren des Status des Gepäcks in der Gepäcknachricht, um anzugeben, dass das Gepäck den Hafen verlassen hat.

2. Verfahren nach Anspruch 1, wobei die am Gepäckstück angebrachte Gepäckkennung ein Gepäckanhänger, eine RFID- oder eine BLE-Bake ist.

3. Verfahren nach Anspruch 1 oder 2, wobei die oder jede Ortskennung ein Strichcode oder ein GPS-Modul ist.

4. Verfahren nach Anspruch 3, wobei die Ortsinformationen einen Ortscode, einen Ortstextdeskriptor oder GPS/Breiten- und Längenkoordinaten beinhalten.

5. Verfahren nach einem vorherigen Anspruch, wobei die Passagierkennung passagierbezogene Daten umfasst, die aus einem im Reservierungssystem gespeicherten Passagiernamen-Datensatz abgerufen werden.

6. Verfahren nach einem vorherigen Anspruch, wobei das Gepäckstück in der Gepäcknachricht als unbekannt gespeichert ist.

7. Verfahren nach einem vorherigen Anspruch, wobei die Scanschritte von einem oder mehreren Handscangeräten durchgeführt werden.

8. Verfahren nach Anspruch 7, wobei einer oder mehrere der Scanschritte von einer auf einem mobilen Kommunikationsgerät laufenden Scan-App durchgeführt werden.

9. Verfahren nach einem vorherigen Anspruch, wobei der Schritt des Erzeugens (1604) eines Gepäckanhängers das elektronische Erzeugen (1604) des Gepäckanhängers und das elektronische Senden des Gepäckanhängers zu dem Passagier beinhaltet.

10. Verfahren nach einem vorherigen Anspruch, wobei der Schritt des Aktualisierens (1610) der Gepäcknachricht das Ändern des Status des Gepäckstücks in der Gepäcknachricht beinhaltet.

11. Verfahren nach einem der Ansprüche 1 bis 10, wobei der Schritt des Aktualisierens (1610) der Gepäcknachricht das Erzeugen und Speichern einer neuen Gepäcknachricht beinhaltet, wobei die neue Gepäcknachricht einen anderen Gepäckstatus als die vorherige Gepäcknachricht hat.

12. Verfahren nach einem vorherigen Anspruch, das beinhaltet, dass der Passagier beim Betreten des Schiffs einen Kontaktpunkt mit einer auf einem mobilen Kommunikationsgerät geladenen Scan-App scant und ein Signal zum Aktualisieren des Status der Gepäcknachricht übermittelt, das die Ablieferung der Gepäckstücke des Passagiers in seiner Kabine ermöglicht.

13. Verfahren nach einem vorherigen Anspruch, wobei das Scannen (1612) des Gepäckanhängers vor der Ankunft in einem Hafen und vor dem Verladen des Gepäcks in einen Gepäckcontainer das Senden einer Nachricht beinhaltet, die angibt, dass sich das Gepäckstück im Besitz des Kreuzfahrtunternehmens befindet.

14. Verfahren nach einem vorherigen Anspruch, wobei nach dem Assoziieren der Gepäckcontainer-Kennung mit dem Gepäck und dem Senden einer die Assoziation enthaltenden aktualisierten Gepäcknachricht eine Nachricht zu dem mobilen Kommunikationsgerät des Passagiers gesendet wird, die die Identität des Gepäckcontainers angibt.

15. Verfahren nach einem vorherigen Anspruch, wobei der Schritt des Feststellens, ob die abgerufene Identität mit der gescannten Gepäckcontainer-Kennung übereinstimmt, das Senden, wenn festgestellt wird, dass keine Übereinstimmung vorliegt, einer Fehlermeldung zum Scanner-Bediener beinhaltet, die angibt, dass keine Übereinstimmung vorliegt.

16. System zum Verfolgen von Gepäck auf einem Kreuzfahrtschiff, das Folgendes umfasst:

für ein mit einem Passagier assoziiertes Gepäckstück Software zum Erzeugen einer eindeutigen Gepäckkennung und Assoziieren derselben mit einer eindeutigen Passagierkennung, um eine Kombinationskennung zu bilden, wobei die Passagierkennung von einem Reservierungssystem abgerufen wird, wobei die Kombinationskennung eine Angabe der Kreuzfahrtgesellschaft und eine eindeutige Referenznummer für das Gepäckstück, den Namen des Passagiers, eine Kreuzfahrtreisennummer, ein Reisedatum, eine Ankunfts- oder Abfahrtsangabe und eine Kabinennummer umfasst;
Software zum Erzeugen (1602) und Speichern einer die Kombinationskennung enthaltenden Gepäcknachricht in einem Datenspeicher;
Software zum Erzeugen (1604) eines Gepäckanhängers mit der Kombinationskennung zum Anbringen am Gepäckstück;
ein Scangerät zum Scannen (1606) des Gepäckanhängers vor dem Einschiffen des Passagiers auf das Kreuzfahrtschiff, um die Kombinationskennung zu lesen, wobei das Scangerät Software für die Kommunikation mit dem Datenspeicher enthält, um die Kombinationskennung gegenüber der gespeicherten Gepäcknachricht zu validieren, so dass das Gepäck eingecheckt werden kann, und um die Gepäcknachricht zu aktualisieren;
ein Scangerät zum Scannen einer in der Region der Passagierkabine angeordneten Ortskennung, wobei das Scangerät Software zum Benachrichtigen (1608) des Passagiers über eine auf dem Mobilgerät des Passagiers gespeicherte Mobilanwendung enthält, dass das Gepäck in seiner Kabine abgeliefert wurde, und um die im Datenspeicher gespeicherte Gepäcknachricht mit dem Status des Gepäckstücks zu aktualisieren (1610);

ein Scangerät zum Scannen (1612) des Gepäckanhängers vor der Ankunft in einem Hafen mit Software zum Aktualisieren des Status der Gepäcknachricht;
ein Scangerät zum Scannen eines Gepäckstücks beim Verladen in einen Gepäckcontainer zur Lieferung an einen Kai, und zum Scannen (1614) einer Gepäckcontainer-Kennung, wobei der Scanner Software zum Assoziieren der Gepäckcontainer-Kennung mit dem Gepäck und zum Senden einer aktualisierten Gepäcknachricht einschließlich der Assoziation mit dem Datenspeicher enthält;
ein Scangerät zum Scannen (1616) der Gepäckcontainer-Kennung, in der das Gepäckstück gehalten wird, und des Gepäckanhängers des Gepäckstücks mit einem Scangerät, wenn das Gepäckstück aus dem Gepäckcontainer ausgeladen wird, wobei der Scanner Software zum Abrufen der assoziierten Gepäckcontainer-Kennung für das Gepäckstück und zum Feststellen enthält, ob die abgerufene Identität mit der gescannten Gepäckcontainer-Kennung übereinstimmt,
ein Scangerät zum Scannen (1618) des Gepäckstücks bei der Abreise des Passagiers vom Hafen und mit Software zum Aktualisieren des Status des Gepäcks in der Gepäcknachricht, um anzugeben, dass das Gepäck den Hafen verlassen hat.

## Revendications

**1.** Procédé de suivi de bagages sur un navire de croisière, comprenant les étapes suivantes :
pour une pièce de bagage associée à un passager, la génération et l'association d'un identifiant de bagage unique à un identifiant de passager unique pour former un identifiant combiné, l'identifiant de passager étant extrait d'un système de réservation, l'identifiant combiné comprenant une indication de la compagnie de croisière et un numéro de référence unique pour la pièce de bagage, le nom du passager, un numéro de voyage de croisière, une date de voyage, un indicateur d'arrivée ou de départ et un numéro de cabine ; la génération (1602) et le stockage d'un message de bagage comportant l'identifiant combiné ; la génération (1604) d'une étiquette de bagage comportant l'identifiant combiné et l'apposition de l'étiquette de bagage sur le bagage ;

avant l'embarquement du passager sur le navire de croisière :
le balayage (1606) de l'étiquette de bagage avec un dispositif de balayage pour lire l'identifiant combiné, la validation de l'identifiant combiné par rapport au message de bagage stocké pour permettre l'enregistrement du bagage et la mise à jour du message de bagage ;
lors de la délivrance du bagage dans la cabine d'un passager :
le balayage d'un identifiant d'emplacement dans la région de la cabine avec un dispositif de balayage et la notification (1608) au passager via une application mobile stockée sur le dispositif mobile du passager que son bagage a été délivré dans sa cabine, et la mise à jour (1610) du message de bagage avec le statut du bagage ;
avant l'arrivée à un port de destination :
le balayage (1612) de l'étiquette de bagage et la mise à jour du statut du message de bagage ; le chargement du bagage dans un conteneur à bagages, le balayage (1614) d'un identifiant de conteneur à bagages et l'association de l'identifiant de conteneur à bagages au bagage et l'envoi d'un message de bagage mis à jour comportant l'association ;
lors du déchargement des conteneurs à bagages dans un port :
pour une pièce de bagage donnée, le balayage (1616) de l'identifiant de conteneur à bagages dans lequel la pièce de bagage est conservée et de l'étiquette de bagage de la pièce de bagage avec un dispositif de balayage, la récupération de l'identifiant de conteneur à bagages associé à la pièce de bagage et la détermination que l'identité récupérée correspond à l'identifiant de conteneur à bagages balayé ;
au départ du passager du port :
le balayage (1618) de la pièce de bagage et la mise à jour du statut du bagage dans le message de bagage pour indiquer que le bagage a quitté le port.

**2.** Procédé selon la revendication 1, dans lequel l'identifiant de bagage fixé au bagage est une étiquette de bagage, une RFID ou une balise BLE.

**3.** Procédé selon la revendication 1 ou 2, où le ou chaque identifiant d'emplacement est un code-barres ou un module GPS

**4.** Procédé selon la revendication 3, dans lequel les informations d'emplacement comprennent un code de localisation, un descripteur de texte d'emplacement ou des coordonnées GPS/latitude et longitude.

**5.** Procédé selon l'une quelconque des revendications précédentes, dans lequel l'identifiant de passager comprend des données relatives au passager extraites d'un enregistrement de passager stocké dans le système de réservation.

**6.** Procédé selon l'une quelconque des revendications précédentes, dans lequel la pièce de bagage est stocké dans le message de bagage comme étant inconnu.

**7.** Procédé selon l'une quelconque des revendications précédentes, dans lequel les étapes de balayage sont réalisées au moyen d'un ou plusieurs dispositifs de balayage portatifs.

**8.** Procédé selon la revendication 7, dans lequel une ou plusieurs des étapes de balayage sont réalisées par une application de balayage exécutée sur un dispositif de communication mobile.

**9.** Procédé selon l'une quelconque des revendications précédentes, dans lequel l'étape de génération (1604) d'une étiquette de bagage comprend la génération (1604) électronique de l'étiquette de bagage et l'envoi électronique de l'étiquette de bagage au passager.

**10.** Procédé selon l'une quelconque des revendications précédentes, dans lequel l'étape de mise à jour (1610) du message de bagage comprend la modification du statut du bagage dans le message de bagage.

**11.** Procédé selon l'une quelconque des revendications 1 à 10, dans lequel l'étape de mise à jour (1610) du message de bagage comprend la génération et l'enregistrement d'un nouveau message de bagage, le nouveau message de bagage ayant un statut de bagage différent de celui du message de bagage précédent.

**12.** Procédé selon l'une quelconque des revendications précédentes, comprenant, lors de l'embarquement à bord du navire, le balayage par le passager d'un point de contact avec une application de balayage chargée sur un dispositif de communication mobile, et la communication d'un signal pour mettre à jour le statut du message de bagage afin de permettre la délivrance du bagage du passager dans sa cabine.

**13.** Procédé selon l'une quelconque des revendications précédentes, dans lequel le balayage (1612) de l'étiquette de bagage avant l'arrivée dans un port et avant le chargement du bagage dans un conteneur à bagages comprend l'envoi d'un message indiquant que l'opérateur de croisière est en possession de la pièce de bagage.

**14.** Procédé selon l'une quelconque des revendications précédentes, après l'association de l'identifiant de conteneur à bagages avec le bagage et l'envoi d'un message de bagage mis à jour comportant l'association, l'envoi d'un message au dispositif de communication mobile du passager indiquant l'identité du conteneur à bagages.

**15.** Procédé selon l'une quelconque des revendications précédentes, dans lequel l'étape de détermination que l'identité récupérée correspond ou non à l'identifiant de conteneur à bagages balayé comprend, lorsqu'il est déterminé qu'il n'y a pas de correspondance, l'envoi d'un message d'erreur à l'opérateur du dispositif de balayage indiquant qu'il n'y a pas de correspondance.

**16.** Système de suivi de bagages sur un navire de croisière, comprenant :

pour une pièce de bagage associée à un passager, un logiciel pour générer et associer un identifiant de bagage unique à un identifiant de passager unique afin de former un identifiant combiné, l'identifiant de passager étant extrait d'un système de réservation, l'identifiant combiné comprenant une indication de la compagnie de croisière et un numéro de référence unique de la pièce de bagage, le nom du passager, un numéro de voyage de croisière, une date de voyage, un indicateur d'arrivée ou de départ et un numéro de cabine ;
un logiciel pour générer (1602) et stocker un message de bagage comportant l'identifiant combiné dans un magasin de données ;
un logiciel pour générer (1604) une étiquette de bagage comportant l'identifiant combiné à apposer sur le bagage ;
un dispositif de balayage pour balayer (1606) l'étiquette de bagage avant l'embarquement du passager sur le navire de croisière afin de lire l'identifiant combiné, le dispositif de balayage comprenant un logiciel de communication avec le magasin de données pour valider l'identifiant combiné par rapport au message de bagage stocké, permettant ainsi l'enregistrement du bagage, et pour mettre à jour le message de bagage ;
un dispositif de balayage pour balayer un identifiant d'emplacement disposé dans la région de la cabine du passager, le dispositif de balayage comprenant un logiciel pour notifier (1608) au passager via une application mobile stockée sur le dispositif mobile du passager que le bagage a été délivré dans sa cabine, et pour mettre à jour (1610) le message de bagage stocké dans la banque de données avec le statut du bagage ;
un dispositif de balayage pour balayer (1612) l'étiquette de bagage avant l'arrivée dans un port doté d'un logiciel de mise à jour du statut du message de bagage ;
un dispositif de balayage pour balayer une pièce de bagage lors de son chargement dans un conteneur à bagages en vue de sa délivrance sur un quai, et pour balayer (1614) un identifiant de conteneur à bagages, le dispositif de balayage comportant un logiciel pour associer l'identifiant de conteneur à bagages au bagage et envoyer un message de bagage mis à jour comportant l'association au magasin de données ;
un dispositif de balayage pour balayer (1616) l'identifiant de conteneur à bagages dans lequel la pièce de bagage est conservée et l'étiquette de bagage de la pièce de bagage avec un dispositif de balayage lorsque la pièce de bagage est déchargée du conteneur à bagages, le dispositif de balayage comportant un logiciel pour récupérer l'identifiant de conteneur à bagages associé à la pièce de bagage et déterminer que l'identité récupérée correspond ou non à l'identifiant de conteneur à bagages scanné ;
un dispositif de balayage pour balayer (1618) la pièce de bagage au départ du passager du port et doté d'un logiciel pour mettre à jour le statut du bagage dans le message de bagage pour indiquer que le bagage a quitté le port.

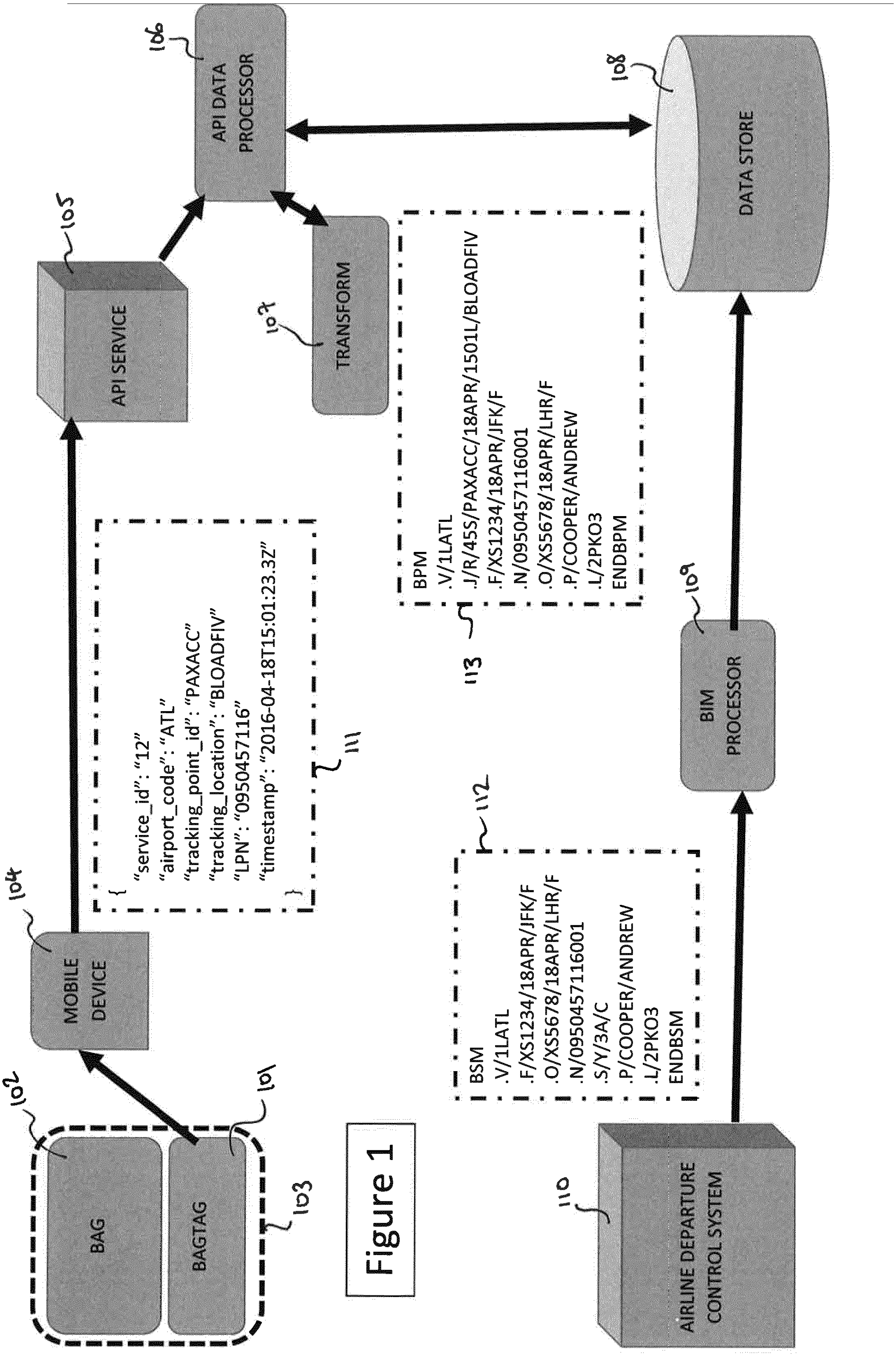
BAG
BAGTAG
102
101
103
MOBILE DEVICE
104
API SERVICE
105
API DATA PROCESSOR
106
TRANSFORM
107
DATA STORE
108
{
"service_id": "12"
"airport_code": "ATL"
"tracking_point_id": "PAXACC"
"tracking_location": "BLOADFIV"
"LPN": "0950457116"
"timestamp": "2016-04-18T15:01:23.3Z"
}
111
BPM
.V/1LATL
.J/R/45S/PAXACC/18APR/1501L/BLOADFIV
.F/XS1234/18APR/JFK/F
.N/0950457116001
.O/XS5678/18APR/LHR/F
.P/COOPER/ANDREW
.L/2PKO3
ENDBPM
113
BSM
.V/1LATL
.F/XS1234/18APR/JFK/F
.O/XS5678/18APR/LHR/F
.N/0950457116001
.S/Y/3A/C
.P/COOPER/ANDREW
.L/2PKO3
ENDBSM
112
BIM PROCESSOR
109
AIRLINE DEPARTURE CONTROL SYSTEM
110

Figure 1

Figure 2.

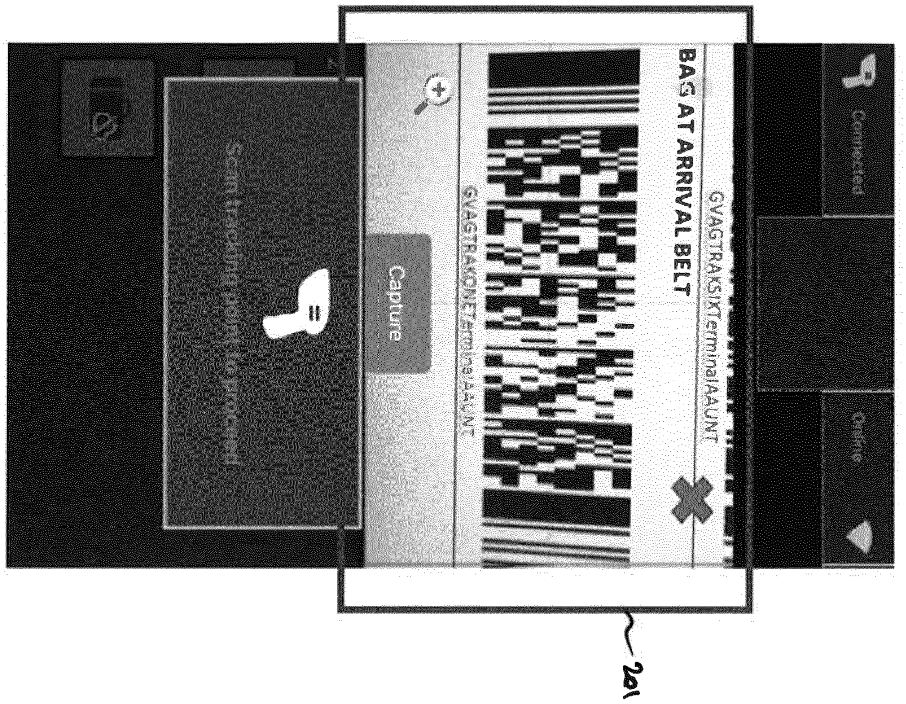


Figure 3

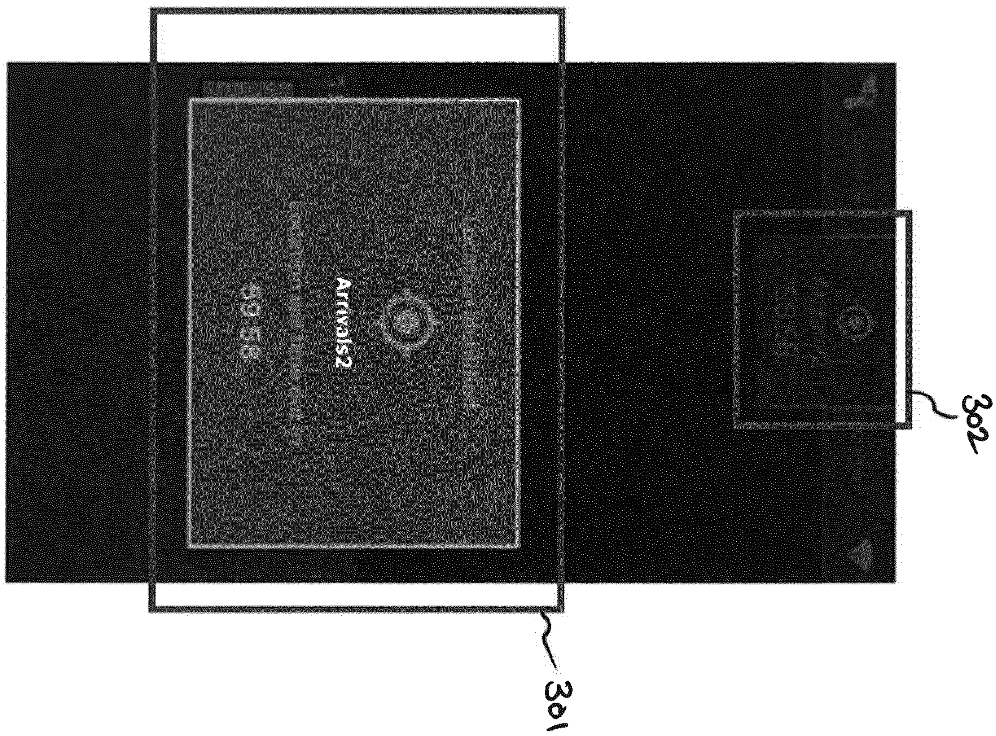

Figure 4

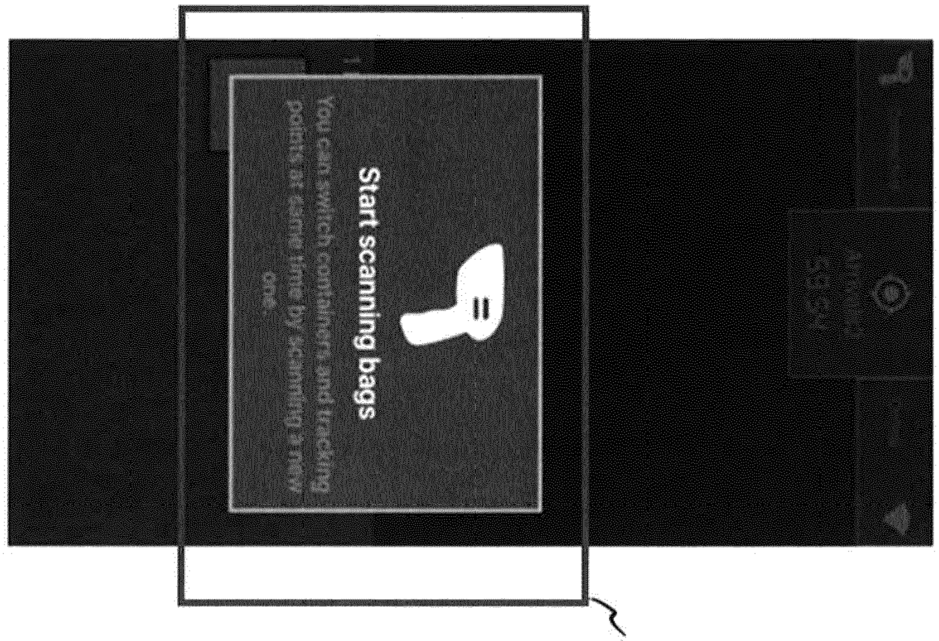


401

Figure 5

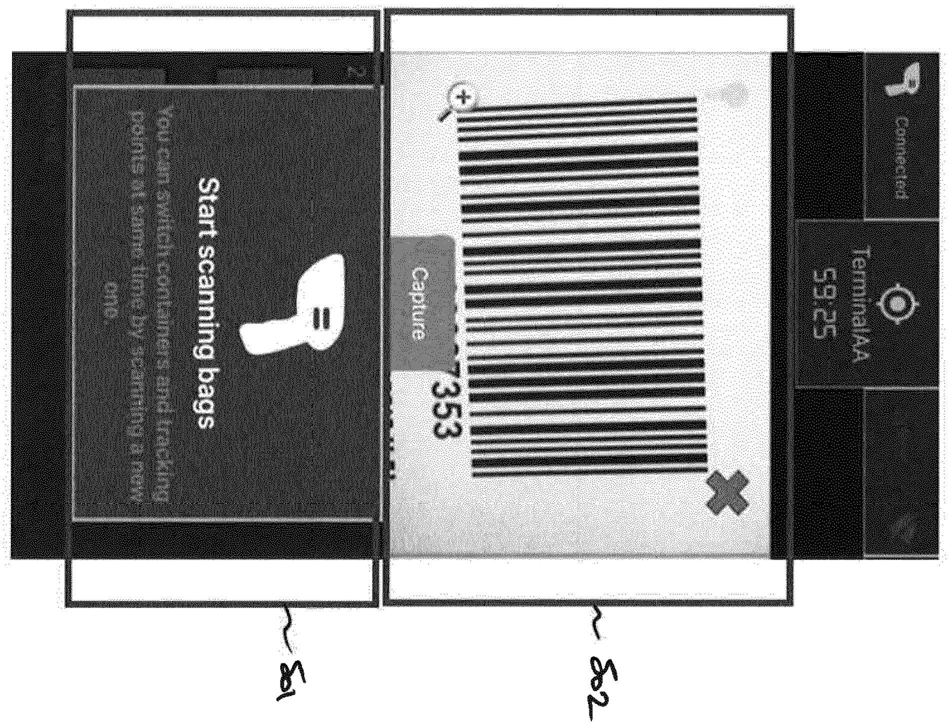


501

502

Figure 6

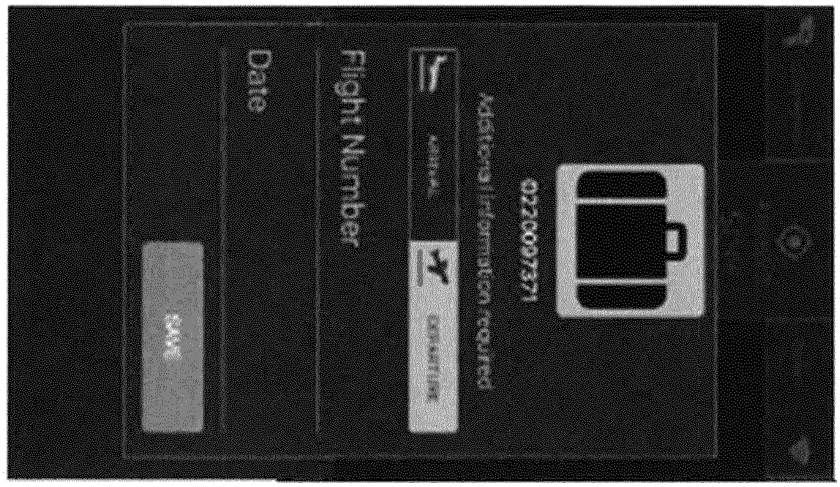


Figure 7

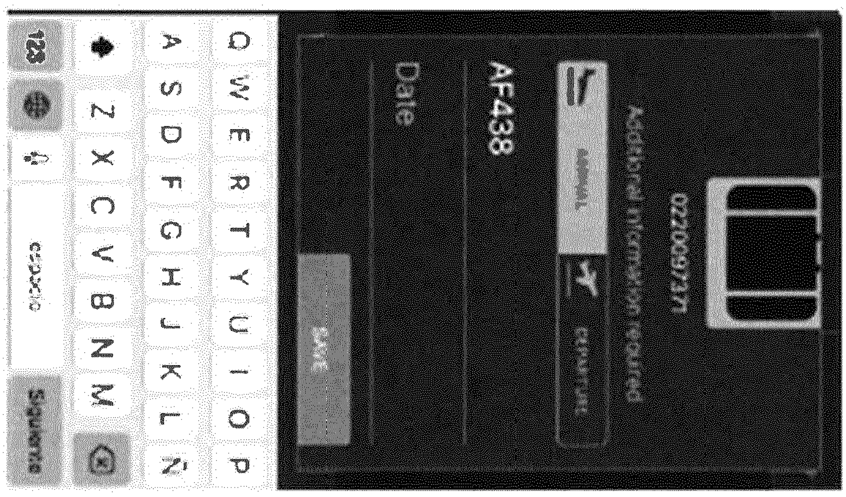


Figure 8

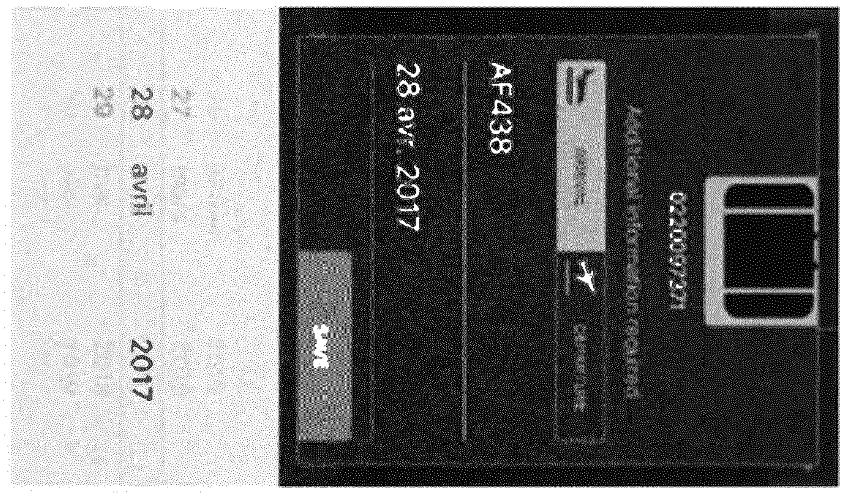

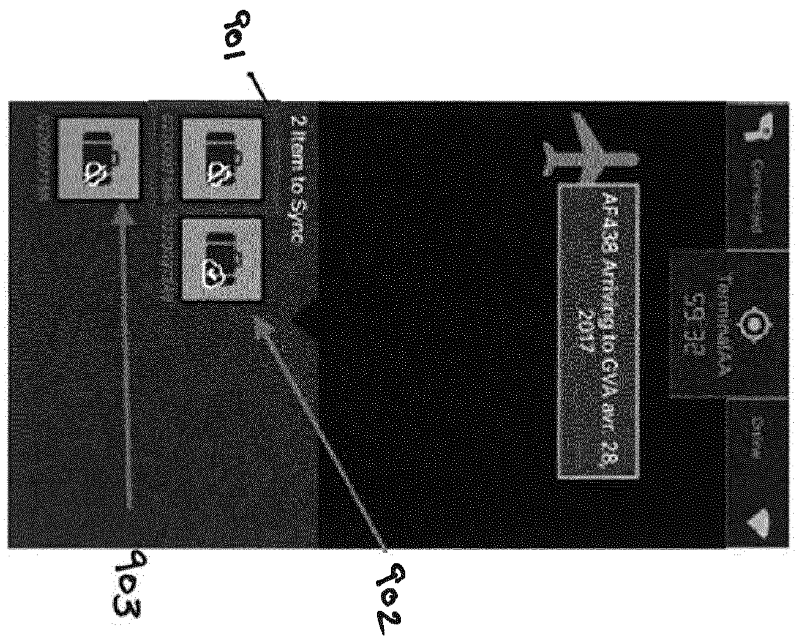


Figure 9

FIGURE 10

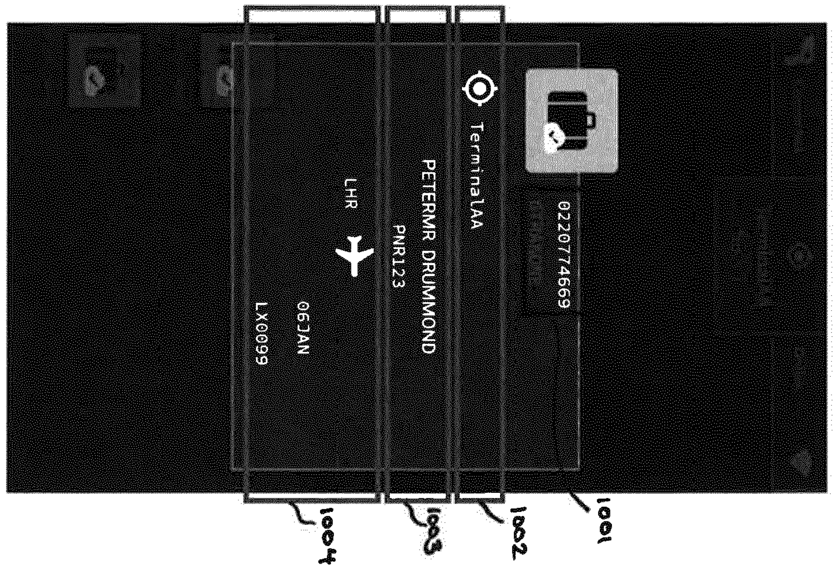


FIGURE 11

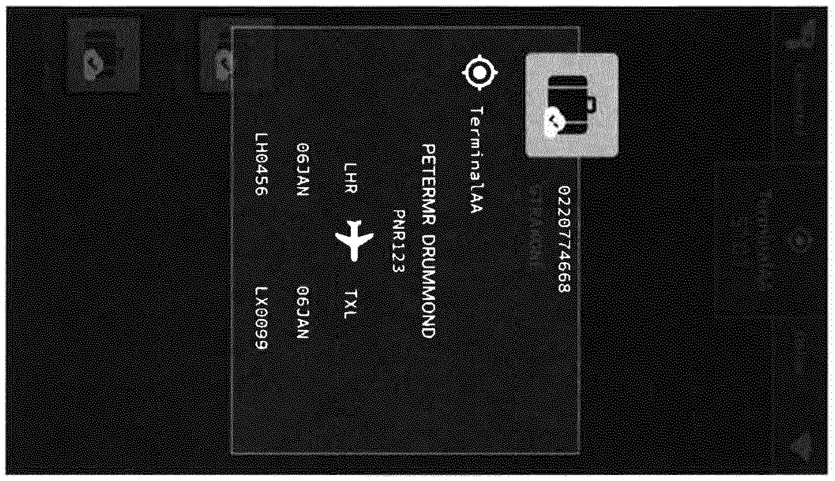


FIGURE 12

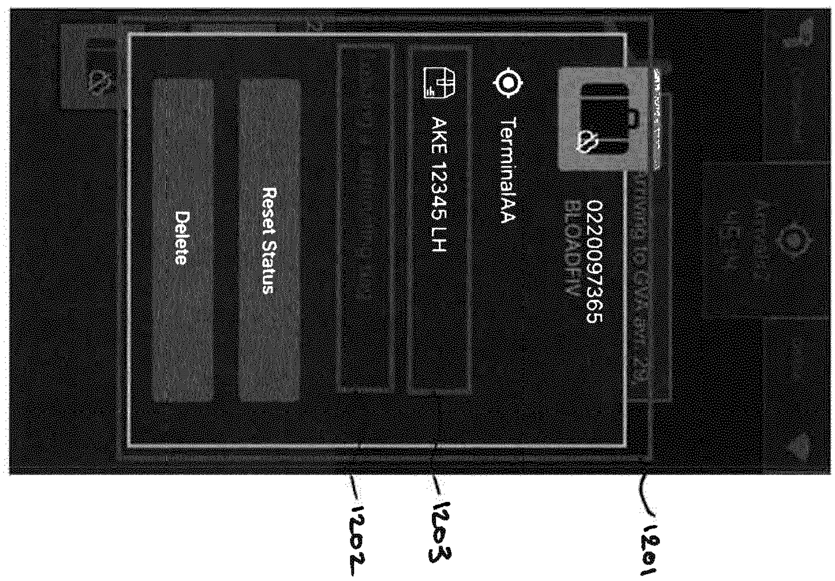

FIGURE 13

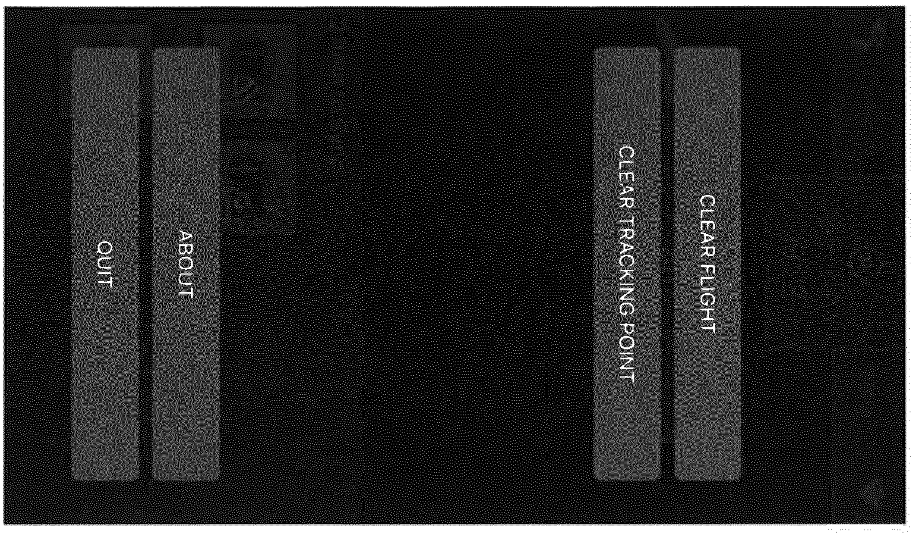

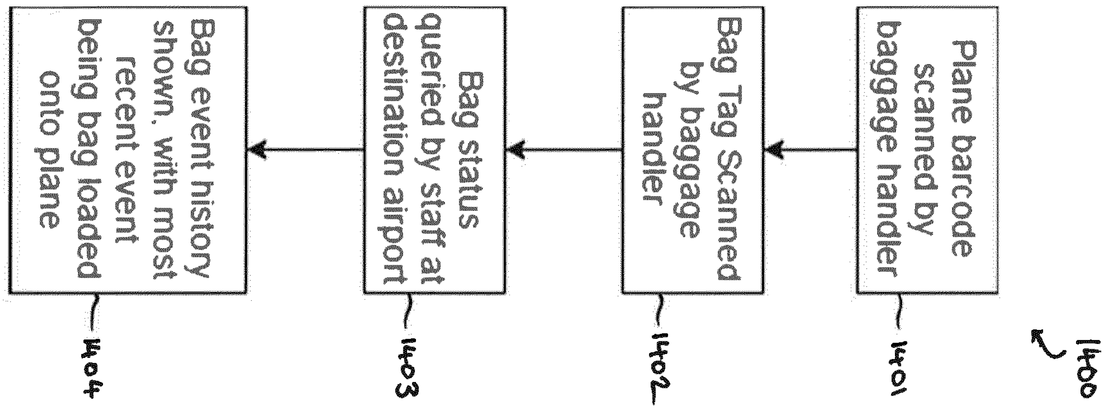


FIGURE 14

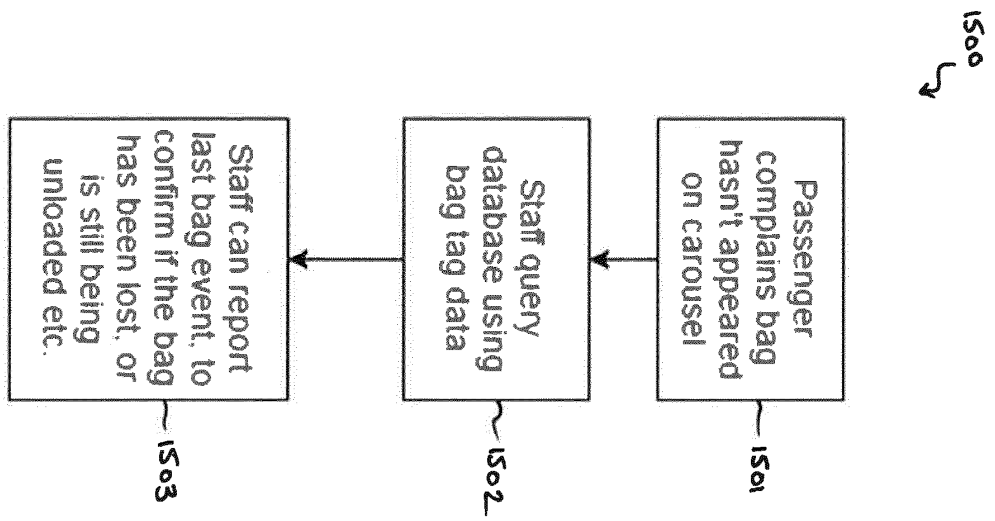


FIGURE 15

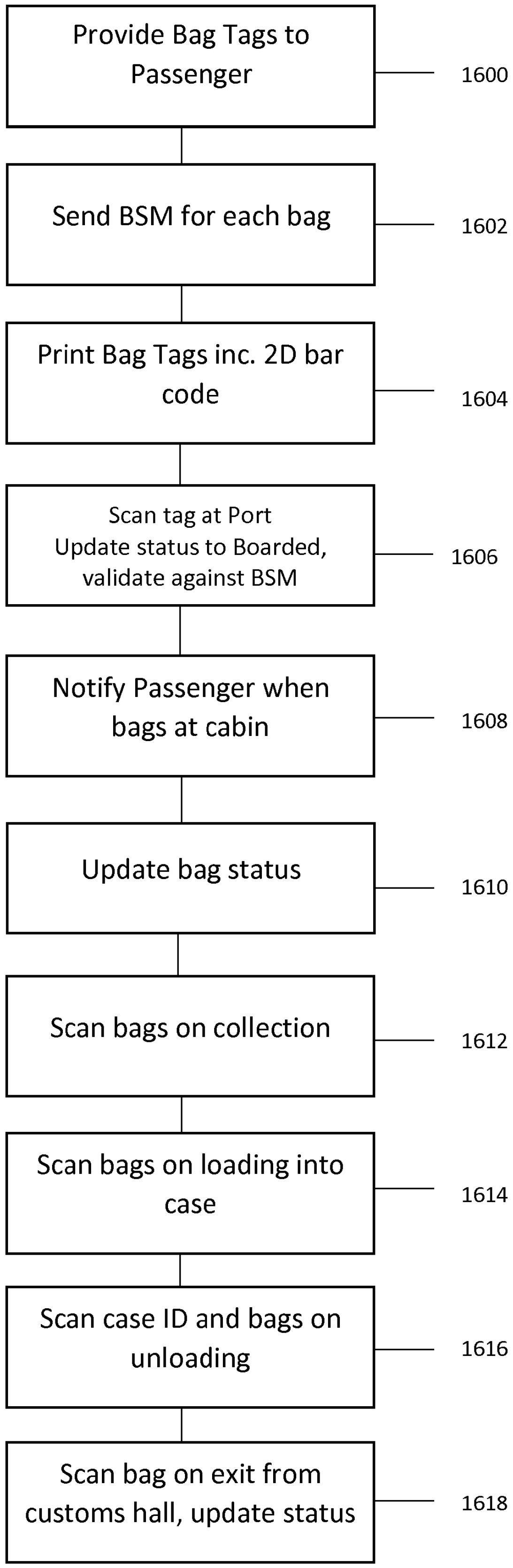
Provide Bag Tags to Passenger
1600
Send BSM for each bag
1602
Print Bag Tags inc. 2D bar code
1604
Scan tag at Port
Update status to Boarded, validate against BSM
1606
Notify Passenger when bags at cabin
1608
Update bag status
1610
Scan bags on collection
1612
Scan bags on loading into case
1614
Scan case ID and bags on unloading
1616
Scan bag on exit from customs hall, update status
1618

FIGURE 16

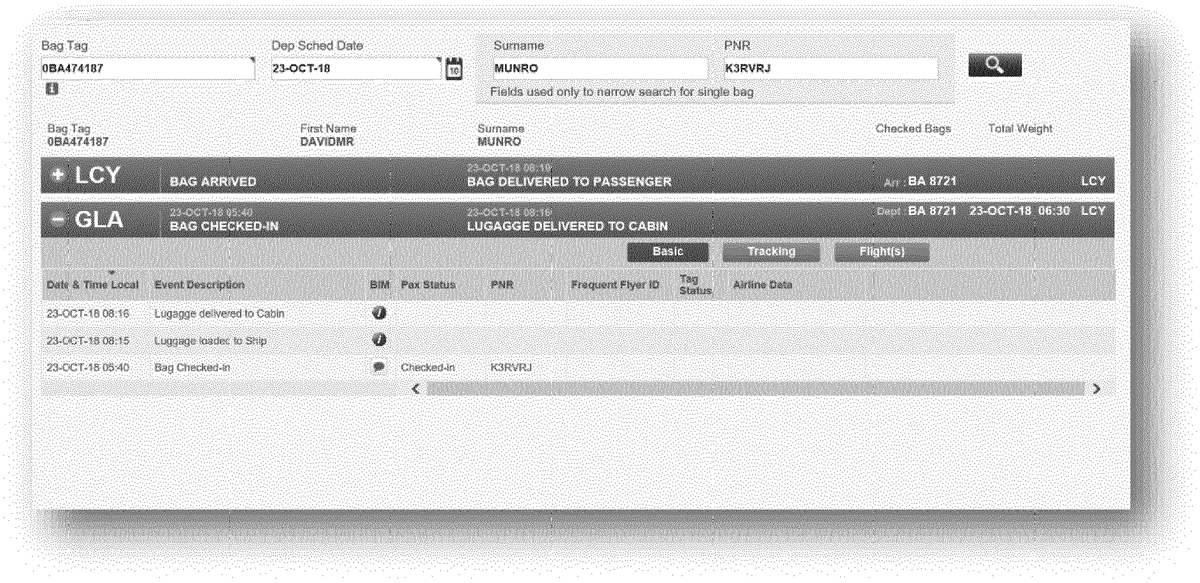


Figure 17

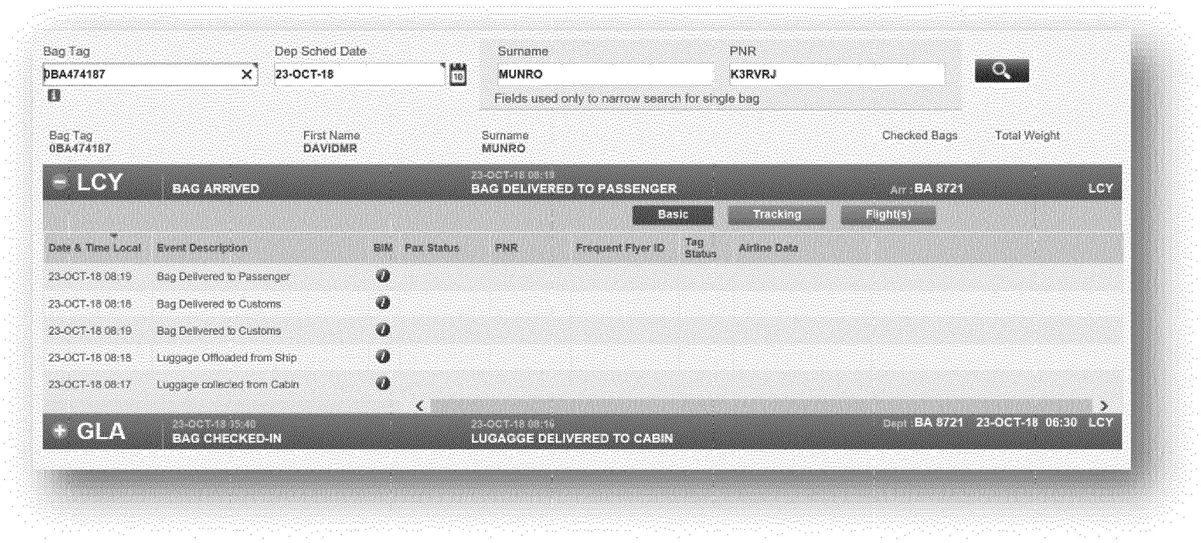


Figure 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005258231 A
- US 2016021491 A